(19) Europäisches Patentamt
European Patent Office
Office européen des brevets

(11) EP 4 395 411 A1

(12) EUROPEAN PATENT APPLICATION
published in accordance with Art. 153(4) EPC

(43) Date of publication:
**03.07.2024 Bulletin 2024/27**

(21) Application number: **22860471.6**

(22) Date of filing: **23.08.2022**

(51) International Patent Classification (IPC):
***H04W 28/26*** *(2009.01)*

(52) Cooperative Patent Classification (CPC):
**H04W 28/26**

(86) International application number:
**PCT/CN2022/114133**

(87) International publication number:
**WO 2023/025125 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.08.2021 CN 202110998314**

(71) Applicant: **Vivo Mobile Communication Co., Ltd.**
**Dongguan, Guangdong 523863 (CN)**

(72) Inventors:
- **YANG, Yuming**
**Dongguan, Guangdong 523863 (CN)**
- **PENG, Shuyan**
**Dongguan, Guangdong 523863 (CN)**
- **JI, Zichao**
**Dongguan, Guangdong 523863 (CN)**
- **WANG, Huan**
**Dongguan, Guangdong 523863 (CN)**

(74) Representative: **Lavoix**
**Bayerstraße 83**
**80335 München (DE)**

# (54) RESOURCE SELECTION METHOD AND APPARATUS, AND TERMINAL

(57) This application discloses a resource selection method, an apparatus, and a terminal, and belongs to the field of communication technologies. The resource selection method in embodiments of this application includes: A terminal obtains resource reservation information. The terminal performs resource selection based on the resource reservation information.

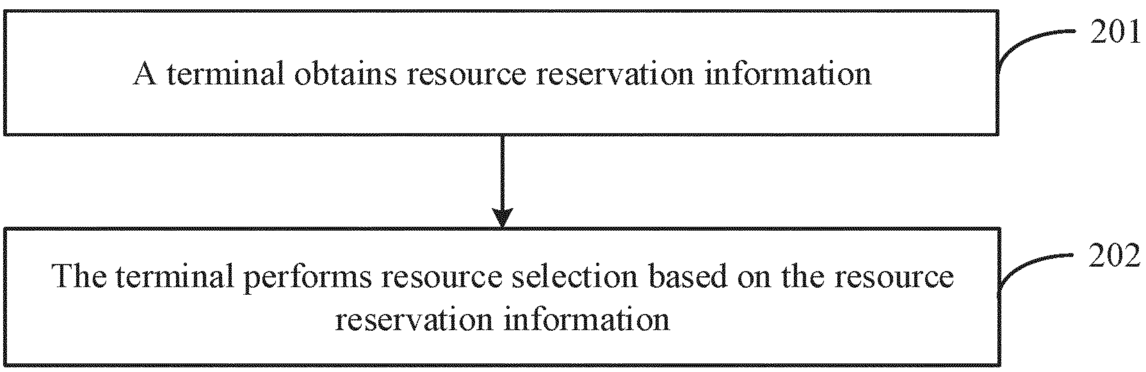


FIG. 2

EP 4 395 411 A1

## Description

### CROSS-REFERENCE TO RELATED APPLICATIONS

This application claims priority to Chinese Patent Application No. 202110998314.5, filed on August 27, 2021 in China, which is incorporated herein by reference in its entirety.

### TECHNICAL FIELD

This application relates to the field of communication technologies, and specifically, to a resource selection method, an apparatus, and a terminal.

### BACKGROUND

In a long term evolution (Long Term Evolution, LTE) sidelink (sidelink), resource reservation supports only periodic reservation, and a same transport block (Transport Block, TB) can perform at most one piece of initial transmission and one piece of blind retransmission. In a new radio (New Radio, NR) sidelink, resource reservation not only supports periodic reservation, but also supports aperiodic reservation. Therefore, an LTE sidelink device and an NR sidelink device cannot share a same resource pool for resource transmission, and consequently, system resource utilization is relatively low.

### SUMMARY

Embodiments of this application provide a resource selection method, an apparatus, and a terminal, which can resolve a problem of relatively low system resource utilization.

According to a first aspect, a resource selection method is provided, including:
A terminal obtains resource reservation information.

The terminal performs resource selection based on the resource reservation information.

According to a second aspect, a resource selection apparatus is provided, including:

an obtaining module, configured to obtain resource reservation information; and
a resource selection module, configured to perform resource selection based on the resource reservation information.

According to a third aspect, a terminal is provided. The terminal includes a processor, a memory, and a program or instructions stored in the memory and capable of running on the processor. When the program or instructions are executed by the processor, the step of the resource selection method according to the first aspect is implemented.

According to a fourth aspect, a terminal is provided, including a processor and a communication interface. The processor is configured to: obtain resource reservation information, and perform resource selection based on the resource reservation information.

According to a fifth aspect, a readable storage medium is provided. A program or instructions are stored on the readable storage medium, and when the program or the instructions are executed by a processor, the step of the resource selection method according to the first aspect is implemented.

According to a sixth aspect, a chip is provided. The chip includes a processor and a communication interface. The communication interface is coupled to the processor, and the processor is configured to run a program or instructions to implement the step of the method according to the first aspect.

According to a seventh aspect, a computer program product is provided. The computer program product is stored in a non-transient storage medium, and the computer program product is executed by at least one processor to implement the step of the resource selection method according to the first aspect.

In embodiments of this application, a terminal obtains corresponding resource reservation information to perform resource selection, and implements co-frequency coexistence between an NR terminal and an LTE terminal by defining a correlation rule of resource selection between the NR terminal and the LTE terminal. This can ensure that the NR terminal communicates normally on a coexisting frequency band without affecting overall performance of the LTE terminal, thereby improving communication efficiency of a sidelink communication system.

### BRIEF DESCRIPTION OF DRAWINGS

FIG. 1a is a block diagram of an LTE sidelink communication system to which an embodiment of this application can be applied;
FIG. 1b is a first schematic diagram of data transmission in an LTE sidelink communication system to which an embodiment of this application can be applied;
FIG. 1c is a second schematic diagram of data transmission in an LTE sidelink communication system to which an embodiment of this application can be applied;
FIG. 1d is a schematic diagram of resource detection performed by a terminal in an LTE sidelink communication system to which an embodiment of this application can be applied;
FIG. 2 is a flowchart of a resource selection method according to an embodiment of this application;
FIG. 3a is a first schematic diagram of resource selection in a second resource reservation manner according to an embodiment of this application;
FIG. 3b is a second schematic diagram of resource selection in a second resource reservation manner according to an embodiment of this application;
FIG. 3c is a third schematic diagram of resource selection in a second resource reservation manner according to an embodiment of this application;
FIG. 4 is a diagram of a structure of a resource selection apparatus according to an embodiment of this application;
FIG. 5 is a structural diagram of a communication device according to an embodiment of this application; and
FIG. 6 is a structural diagram of a terminal according to an embodiment of this application.

## DESCRIPTION OF EMBODIMENTS

The following clearly describes the technical solutions in embodiments of this application with reference to the accompanying drawings in embodiments of this application. Apparently, the described embodiments are some but not all of the embodiments of this application. All other embodiments obtained by a person of ordinary skill in the art based on embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that, the technologies described in embodiments of this application are not limited to a long term evolution (Long Term Evolution, LTE)/LTE-Advanced (LTE-Advanced, LTE-A) system and a new radio (New Radio, NR) system, and can also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a $6^{th}$ generation ($6^{th}$ Generation, 6G) communication system.

Currently, an LTE system supports sidelink transmission, that is, user equipment (User Equipment, UE) directly performs data transmission on a physical layer. A 5G NR (New Radio) system supports a more advanced sidelink transmission design, such as a unicast design, a multicast design, or a groupcast design, thereby supporting services of more comprehensive types.

FIG. 1a is a block diagram of an LTE sidelink communication system to which an embodiment of this application can be applied. The communication system includes a terminal 11 and a network side device 12. The terminal 11 may also be referred to as a terminal device or a user terminal. The terminal 11 may be a terminal side device such as a mobile phone, a tablet personal computer (Tablet Personal Computer), a laptop computer (Laptop Computer), or be referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with a wireless communication function, such as a refrigerator, a television, a washing machine, or furniture), and a wearable device includes: a smart watch, a smart band, a smart headset, smart glasses, smart jewelry (a smart bracelet, a smart ring, a smart necklace, a smart bangle, a smart anklet, and the like), a smart wrist strap, a smart dress, a game machine, and the like. It should be noted that a specific type of the terminal 11 is not limited in embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved NodeB, eNB), a home NodeB, a home evolved NodeB, a wireless local area network (Wireless Local Area Network, WLAN) access point, a wireless fidelity (Wireless Fidelity, Wi-Fi) node, a transmitting receiving point (Transmitting Receiving Point, TRP), or another appropriate term in the art. As long as a same technical effect is achieved, the base station is not limited to a specified technical term. It should be noted that, in embodiments of this application, only a base station in an NR system is used as an example, but a specific type of the base station is not limited.

To facilitate understanding of the technical solutions in embodiments of this application, the following first explains some terms used in embodiments of this application.

A physical sidelink control channel (Physical Sidelink Control Channel, PSCCH) of an LTE sidelink and a physical sidelink shared channel (Physical Sidelink Shared Channel, PSSCH) are transmitted in a same subframe. For ease of description, the PSCCH of the LTE sidelink may also be referred to as an LTE SCI format 1, and frequency domain between the LTE SCI format 1 and the PSSCH may be continuous, or may be discontinuous, and may be divided into two selection manners.

Selection manner 1: As shown in FIG. 1b, the LTE SCI format 1 (SA in the figure) is mapped from a lowest frequency domain location in a subchannel (subchannel) of a resource selected for data transmission, and occupies two physical resource blocks (Physical Resource Block, PRB).

Selection manner 2: As shown in FIG. 1c, the LTE SCI format 1 (SA in the figure) is mapped from a frequency domain location in an SA resource pool (resource pool) corresponding to a lowest subchannel selected for data transmission, and occupies two PRBs.

A composition of the LTE SCI format 1 includes the following indication fields.

| Indication field type | Number of bits (Number of bits) |
|---|---|
| Priority | 3 |
| Periodic reservation value (Resource reservation) | 4 |
| Frequency resource location of initial transmission and retransmission (Frequency resource location of initial transmission and retransmission) | $\left\lceil \log_2(N_{\text{subchannel}}^{\text{SL}}(N_{\text{subchannel}}^{\text{SL}}+1)/2) \right\rceil$ |
| Time gap between initial transmission and retransmission (Time gap between initial transmission and retransmission) | 4 |
| Periodically reserved periodicity | Unknown |
| Modulation and coding scheme (Modulation and coding scheme, MCS) | 5 |
| Retransmission indication | 1 |
| Transmission mode | 1 |
| Reserved bit | Difference between 32 bits and all the foregoing bits |

For an NR sidelink communication system, an SCI format 1-A in the NR sidelink may be 1$^{st}$ SCI, where a composition of the 1$^{st}$ SCI includes the following indication fields.

| Indication field type | Number of bits (Number of bits) |
|---|---|
| Priority | 3 |
| Aperiodically reserved frequency domain resource | |
| Aperiodically reserved time domain resource | 5/9 |
| Offset (beta-offset) indication | 2 |

(continued)

| Indication field type | Number of bits (Number of bits) |
|---|---|
| Periodically reserved periodicity | Unknown |
| $2^{nd}$ SCI format indication | 2 |
| Number of demodulation reference signal (Demodulation Reference Signal, DMRS) ports | 1 |
| DMRS pattern | 2 |
| MCS | 5 |
| Additional MCS table indication | Unknown |
| Physical sidelink feedback channel (PSFCH) overhead indication | 1 |
| Reserved bit | 4 |

NR sidelink resource allocation:

Two resource allocation modes are defined for an NR vehicle to everything (vehicle to everything, V2X). One is a mode 1, and a resource is scheduled for a base station. The other is mode 2, and UE decides which resource to use for transmission. In this case, resource information may come from a broadcast message or preconfigured information of the base station. If the UE works in a base station range and has a radio resource control (Radio Resource Control, RRC) connection to the base station, the UE may be the mode I and/or the mode 2. If the UE works in the base station range but has no RRC connection to the base station, the UE can only work in the mode 2. If the LTE is outside a base station range, the UE can only work in the mode 2, and perform V2X transmission based on the preconfigured information.

For the mode 2, a specific working manner is as follows: (1) After resource selection is triggered, a transmit terminal first determines a resource selection window, a lower boundary of the resource selection window is in T1 time after the resource selection is triggered, an upper boundary of the resource selection is in T2 time after triggering, where T2 is a value selected in a manner implemented by the UE in a packet delay budget (packet delay budget, PDB) of TB transmission, and T2 is not earlier than T1. (2) Before the resource selection, the UE needs to determine a candidate resource set (candidate resource set) of the resource selection, and compares reference signal received power (Reference Signal Received Power, RSRP) that is measured on a resource in the resource selection window with a corresponding RSRP threshold. If the RSRP is less than the RSRP threshold, the resource may be included in the resource candidate set. (3) After the resource candidate set is determined, the UE randomly selects a transmission resource from the resource candidate set. In addition, the UE may reserve a transmission resource for next transmission in this transmission.

Resource selection of pedestrian UE (Pedestrian UE, PUE) in LTE:

In LTE, some detection is mainly designed to reduce power, and is to support communication of P2V. The PUE supports resource selection in two modes. One is random resource selection. The other is to first perform partial detection, select a resource based on a result of partial detection, and perform semi-static resource reservation. Which mode is selected by the PUE is configured for the RRC. When the RRC is configured to support resource selection in the two modes, the PUE implementation determines which resource selection manner is used.

Specifically, for a manner in which the terminal performs partial detection and performs resource detection, refer to FIG. 1D. As shown in FIG. 1D, a PUE detection window is a window a and a window b that are in a range of [n-1,000, n]. The detection windows a and b use a selection window c as a position reference, and use 100 as a step, and push forward 100*k as a detectable location. A location of the window c and a length Y (a minimum value of Y is a parameter configured by the RRC) are selected for implementation of the terminal, k is a parameter configured by the RRC, and a value range of k may be 10 bitmaps, indicating a location of the window a. The terminal detects an SCI sent by the another terminal in the detection windows a and b, and speculates, based on the detected SCI and a reservation period, a resource reservation status of the another terminal in the window c. The UE may exclude, according to the information, a resource that does not meet a condition in the selection window. At least 20% of remaining resources (20% of the window length Y) are selected as the candidate resource set, and reported to a MAC layer. The MAC layer randomly selects a resource from the candidate resource set as the candidate resource of the UE. The UE performs periodic reservation on the selected resource, and the reservation period is indicated in the SCI.

Periodic configuration:

In NR V2X, if a resource pool supports periodic configuration, the configured periodic values in the resource pool are 0, [1:99], 100, 200, 300, 400, 500, 600, 700, 800, 900, and 1,000 ms. The RRC can configure a maximum of 16 values from the selectable periodic values. The configured values include periodic configuration of 0 ms.

In LTE V2X, optional periodic values are 20, 50, 100, 200, 300, 400, 500, 600, 700, 800, 900, and 1,000 ms.

Re-evaluation of NR sidelink resource selection:

In a mode 2 resource allocation mode, a resource selection re-evaluation (re-evaluation) mechanism is supported. A brief description of the mechanism is as follows: To determine whether a resource (PSCCH/PSSCH resource) that has been selected but is not reserved is still in an idle or low interference state, the UE performs resource selection re-evaluation at least at a moment 'm-T3', a moment 'm' is a moment at which reservation information of the resource is first sent, and T3 includes at least duration in which the UE performs resource selection processing. The UE re-executes a resource selection step at least at 'm-T3' to obtain the candidate resource set. If the resource selected by the UE is still in the candidate resource set, the UE does not need to perform resource reselection. Otherwise, the UE selects a new transmission resource from the candidate set.

NR sidelink resource pre-emption (Resource pre-emption):

In the mode 2 resource allocation mode, a resource pre-emption (pre-emption) mechanism is supported. A brief description of the mechanism is as follows: A resource reserved by UE overlaps (partially overlaps) with a resource reserved/selected by other UE having a higher priority service. If a measurement value of SL-RSRP of the UE on a related resource is greater than an associated SL-RSRP threshold, the UE triggers resource reselection. To determine whether the reservation resource (PSCCH/PSSCH resource) is pre-empted, the UE performs pre-emption detection at least at the 'm-T3' moment, where the 'm' moment is a moment at which the resource is located or a moment at which reservation information of the resource is sent, and T3 includes at least duration in which the UE performs resource selection processing. The UE re-executes a resource selection step at least at 'm-T3' to obtain the candidate resource set. If the resource selected by the UE is still in the candidate resource set, the UE does not need to perform resource reselection. Otherwise, the UE selects a new transmission resource from the candidate set.

With reference to the accompanying drawings, the following describes in detail a resource selection method, an apparatus, and a related device provided in embodiments of this application by using some embodiments and application scenarios thereof.

Refer to FIG. 2. FIG. 2 is a flowchart of a resource selection method according to an embodiment of this application. As shown in FIG. 2, the method includes the following steps.

Step 201: A terminal obtains resource reservation information.

The resource reservation information includes at least one of the following: a priority of a data packet, a periodicity value of a first resource reservation manner, a time domain resource of a second resource reservation manner, a frequency domain resource of the second resource reservation manner, a time domain resource of a first transmission manner, a time domain resource of different hybrid automatic repeat request (Hybrid automatic repeat request, HARQ) processes corresponding to a same transport block (Transport Block, TB), and a frequency domain resource of different HARQ processes corresponding to a same TB.

It should be noted that the first resource reservation manner may also be referred to as a periodic reservation manner, the second resource reservation manner may be referred to as an aperiodic reservation manner, and the aperiodic reservation may be a resource reserved for retransmission. The first transmission manner may also be referred to as a blind retransmission indication, and the blind retransmission may be retransmission when HARQ is disabled. In some embodiments, the blind retransmission indication may be a retransmission resource indicated by a time gap (time gap between initial transmission and retransmission) between initial transmission and retransmission in first control information.

Optionally, the obtaining resource reservation information includes at least one of the following:

obtaining resource reservation information from a resource reservation indication field of the first control information, where the first control information is control information of a first-type terminal;
obtaining resource reservation information from a resource reservation indication field of second control information, where the second control information is control information of the first-type terminal;
obtaining resource reservation information from a resource reservation indication field of third control information, where the third control information is control information of a second-type terminal;
when the second resource reservation manner and/or a resource selection manner of the terminal are a first preset manner, obtaining resource reservation information from HARQ association indication information in the first control information, or obtaining resource reservation information from HARQ association indication information in the second control information;

when the second resource reservation manner and/or the resource selection manner of the terminal are/is a second preset manner, obtaining resource reservation information from the resource reservation indication field in the second control information; and

when the first transmission manner and the second resource reservation manner are used by the terminal, obtaining resource reservation information from the resource reservation indication field of the second control information and a time gap indication field between initial transmission and retransmission in the first control information.

To better understand the technical solutions of this application, the first-type terminal in this application refers to an NR terminal, the second-type terminal refers to an LTE terminal, the first control information and the second control information are two different types of control information of the NR terminal, and the third control information is control information of the LTE terminal. Certainly, in some other embodiments, the first-type terminal may also refer to an LTE terminal, and the second-type terminal may refer to an NR terminal.

In this embodiment of this application, the first control information sent by the NR terminal is only used for resource selection of the LTE terminal, and the second control information sent by the NR terminal may be used for resource selection of the NR terminal and the LTE terminal. It should be noted that the first control information is essentially sidelink control information SCI. However, different from existing SCI, to avoid confusion with the existing SCI, the following related description is written as SA. The first control channel is essentially a physical sidelink control channel (Physical Sidelink Control Channel, PSCCH). However, unlike an existing PSCCH, to avoid confusion with the existing PSCCH, the following related description is written as PSCCH_SA.

Optionally, the first control information may be in a first information format, and the first information format is a control information format in another communication system that is different from a communication system corresponding to the terminal, so that the terminal in the another communication system can successfully decode the first control information. For example, the terminal is the NR terminal. The first control information sent by the NR terminal may be obtained by using an SCI format 1 in the LTE sidelink, so that the LTE terminal can successfully decode the first control information sent by the NR terminal, and obtain resource reservation-related information indicated by the first control information for resource selection. This does not affect performance of the LTE terminal in the system, so that the LTE terminal and the NR terminal can share a same resource pool for resource transmission, thereby improving system resource utilization.

The second control information may be understood as enhanced information of the first control information. The NR terminal is used as an example. In addition to sending the first control information, the NR terminal may further send the second control information. The first control information is mainly used by the LTE terminal to read resource reservation information of the NR terminal for resource selection, and the second control information is mainly used by another NR terminal to read the resource reservation information of the NR terminal for resource selection, data receiving, HARQ feedback, and the like.

The second control information is essentially sidelink control information SCI, but is different from existing SCI. The first control channel is essentially a physical sidelink control channel (Physical Sidelink Control Channel, PSCCH), but is different from an existing PSCCH.

The first control information may include at least one of the following:

(i) First indication information indication field. The first indication information indication field is mainly used to distinguish between the terminal and/or specific information indicating the terminal (for example, NR UE).

(ii) Priority indication field. For example, the priority indication field is used to indicate a priority of currently sent data.

(iii) Resource reservation indication field. For example, the resource reservation indication field is used to indicate a periodicity value reserved by a period.

(iv) Frequency domain location indication field. For example, the frequency domain location indication field is used to indicate a frequency domain location of an initial transmission and retransmission resource.

(v) Initial transmission retransmission gap indication field. For example, the initial transmission retransmission gap indication field is used to indicate a time domain offset of a time domain location of the initial transmission and retransmission resource.

(vi) Modulation and coding scheme (Modulation and Coding Scheme, MCS) indication field. For example, the modulation and coding scheme indication field is used to indicate an MCS level.

(vii) Retransmission indication field. For example, the retransmission indication field is used to indicate whether retransmission is allowed.

(viii) Transmission format indication field. For example, the transmission format indication field is used to indicate whether a transmission format uses rate matching, transport block size (Transport Block size, TBS) scaling (scaling), puncturing (puncturing), no TBS-scaling, or the like.

(ix) Hybrid automatic repeat request (Hybrid Automatic Repeat reQuest, HARQ) association information indication field. For example, the hybrid automatic repeat request association information indication field is used to indicate that reservation resources in multiple HARQ processes belong to a same transport block (Transport Block, TB), an SL process, a MAC PDU (MAC PDU), and the like.

(x) Format indication field of the second control information. For example, the format indication field is used to indicate a format of different second/third control information.

(xi) Physical sidelink feedback channel (Physical Sidelink Feedback Channel, PSFCH) overhead indication field. For example, the physical sidelink feedback channel overhead indication field is used to indicate PSFCH overhead related information.

(xii) Beta-offset indication field. For example, the beta-offset indication field is used to indicate related information that is used to indicate to determine the second/third control information carried on the first shared channel (for example, PSSCH_SA), such as a mapping manner and a quantity of modulation symbols.

The second control information may include at least one of the following:

(i) Priority indication field. For example, the priority indication field is used to indicate a priority of currently sent data.

(ii) Frequency domain location indication field. For example, the frequency domain location indication field is used to indicate a frequency domain location of a reservation resource.

(iii) Time domain location indication field. For example, the time domain location indication field is used to indicate a relative time domain location of a reservation resource.

(iv) Reservation period indication field. For example, the reservation period indication field is used to indicate a periodicity value reserved by a period.

(v) Demodulation reference signal (Demodulation Reference Signal, DMRS) pattern (pattern) indication field. For example, the demodulation reference signal pattern indication field is used to indicate a pattern to which a DMRS specifically uses.

(vi) Format (format) indication field of the second control information. For example, the format indication field is used to indicate a format of possible next SCI, that is the second control information.

(vii) Beta offset indication field. For example, the beta_offset indication field used to indicate to determine related information of control information carried on the first shared channel, for example, calculate an intermediate quantity of information such as a quantity of modulation symbols.

(viii) DMRS port quantity indication field. For example, the DMRS port quantity indication field is used to indicate a quantity of ports (port).

(ix) Modulation and coding scheme (MCS) indication field. For example, the modulation and coding scheme indication field is used to indicate an MCS level.

(x) Additional MCS indication field. For example, the additional MCS indication field is used to additionally perform MCS indication.

(xi) Physical sidelink feedback channel (Physical Sidelink Feedback Channel, PSFCH) overhead indication field. For example, the physical sidelink feedback channel overhead indication field is used to indicate PSFCH overhead related information.

(xii) Hybrid automatic repeat request (Hybrid Automatic Repeat reQuest, HARQ) process quantity indicator field. For example, the hybrid automatic repeat request process quantity indicator field is used to indicate a quantity of HARQ processes.

(xiii) New data (New data) indication field.

(xiv) Redundancy version (Redundancy version) indication domain.

(xv) Source identifier ID indication field. For example, the source identifier ID indication field is used to indicate an ID of sending UE.

(xvi) Destination ID indication field. For example, the destination ID indication field is used to indicate an ID of receiving UE.

(xvii) HARQ feedback switch indication field. For example, the HARQ feedback switch indication field is used to indicate whether HARQ feedback is allowed.

(xviii) Propagation type indication field. For example, the propagation type indication field is used to indicate whether current transmission belongs to unicast, multicast, or broadcast.

(xix) Channel state information (Channel State Information, CSI) request indication field. For example, the channel state information request indication field is used to trigger a CSI report (report).

(xx) Area ID indication field. For example, the area ID indication field is used to indicate an area ID.

(xxi) Communication range indication field. For example, the communication range indication field is used to indicate an area for feeding back a NACK.

(xxii) HARQ process association indication field. For example, the HARQ process association indication field is used to indicate that reservation resources in multiple HARQ processes belong to a same transport block (Transport Block, TB), an SL process, a MAC PDU (protocol data unit), and the like.

The third control information may be the foregoing LTE SCI format 1. For specific information content, refer to the foregoing description. Details are not described herein again.

Optionally, the terminal may obtain the resource reservation information from the resource reservation indication field of the foregoing different control information. For example, the terminal is the NR terminal, and the NR terminal may obtain the resource reservation information from the resource reservation indication field of the third control information. It may be understood that, because the NR terminal introduces sending and receiving of the first control information, the NR terminal may detect a resource reservation of the LTE terminal by using the third control information sent by the LTE terminal. Therefore, the NR terminal may avoid a resource reserved by the LTE terminal when resource selection is performed, so as to achieve co-frequency coexistence.

For example, when the NR terminal receives the control information in a timeslot t, and determines, based on the control information format or the related information, that the terminal corresponding to the control information is the LTE terminal. In this case, the control information is the foregoing third control information, for example, if the third control information is the SCI format 1 information of the LTE, the NR terminal obtains a periodic reservation value from the resource reservation indication field resource reservation in the SCI format 1 information. If the NR terminal determines, based on a control information format or based on related information, that the terminal corresponding to the received control information is the NR terminal, the NR terminal may obtain a periodic reservation value from the periodic reservation indication field of the second control information or obtain a periodic reservation value from the resource reservation indication field of the first control information based on a protocol pre-definition or network pre-configuration or network configuration.

Alternatively, when the NR terminal receives the control information in the timeslot t, and determines, based on the control information format or the related information, that the terminal corresponding to the control information is the LTE terminal, the NR terminal determines, based on a retransmission index indication field, whether retransmission is possible. If retransmission is possible, the NR terminal obtains the resource reservation information based on the time gap indication field between initial transmission and retransmission. If it is determined, based on the control information format or the related information, that the terminal corresponding to the control information is the NR terminal, and if the NR terminal disables an aperiodic reservation manner in the protocol R16/R17, the NR terminal may indicate one piece of retransmission by using the blind retransmission indication field in the first control information. The NR terminal may obtain the aperiodic reservation information from the time gap indication field between initial transmission and retransmission of the first control information based on a protocol pre-definition or network preconfiguration or network configuration.

In some embodiments, if the terminal uses the first transmission manner (which may also be referred to as a blind retransmission manner) and the second resource reservation manner (which may also be referred to as the aperiodic reservation manner), the terminal may obtain the resource reservation information from the resource reservation indication field in the second control information sent by the NR terminal and a time gap (Time gap between initial transmission and retransmission) indication field between initial transmission and retransmission in the first control information.

Alternatively, in some embodiments, if the second resource reservation manner (which may also be referred to as the aperiodic reservation manner) and/or the resource selection manner of the terminal are/is the first preset manner, the terminal may obtain the resource reservation information by using the HARQ association indication information in the first control information or the second control information. If the second resource reservation manner and/or the resource selection manner of the terminal are/is the second preset manner, the terminal obtains the resource reservation information from the resource reservation indication field in the second control information. For example, in the second preset manner, the terminal may be in an aperiodic reservation manner of NR in the reuse protocol R16 or R17, so as to avoid an LTE resource through resource selection, re-evaluation, or resource pre-emption of the NR terminal.

Optionally, the first preset manner is determined by using at least one of the following: a protocol pre-definition, pre-configuration, configuration, and an indication. And/or the second preset manner is determined by using at least one of the following: a protocol pre-definition, pre-configuration, configuration, and an indication.

The preconfiguration may be preconfigured by the base station or preconfigured by the terminal, the configuration may be configured by the base station or configured by the terminal, and the indication information may be indication information sent by the base station or indication information sent by the terminal. Optionally, the first preset manner is a manner of determining the second resource reservation manner (aperiodic reservation) by using the HARQ association indication information, and the second preset manner is a manner of directly indicating, by using the time domain resource indication field and the frequency domain resource indication field, the second resource reservation manner to reserve a resource.

In this embodiment of this application, in the first preset manner, the terminal meets at least one of the following:

A TB transmitted by the terminal is associated with N HARQ processes, where N is a positive integer.

A time gap between a reservation resource in the second resource reservation manner and a resource transmitted in the first transmission manner is a data processing time of the terminal or a physical sidelink feedback channel (Physical Sidelink Feedback Channel, PSFCH) sending processing time.

When the terminal is the second-type terminal, the resource reservation information is determined by detecting first control information of each HARQ of the second-type terminal and the first-type terminal, and resource exclusion is performed.

For example, when a protocol pre-defines that the resource selection manner of the NR terminal is the first preset manner, the TB transmitted by the NR terminal associates with the N HARQ processes, so as to implement aperiodic resource reservation by using multiple different HARQ processes. The value of N is determined according to any one of the following: a protocol pre-definition, pre-configuration, configuration, a radio resource control (Radio Resource Control, RRC) indication, a medium access control control element (Medium Access Control Control Element, MAC CE) indication, a downlink control information (Downlink Control Information, DCI) indication, and a sidelink control information (Sidelink Control Information, SCI) indication. And/or, the value of N is related to at least one of the following: a channel occupancy ratio (Channel Occupancy Ratio, CR), a channel busy ratio (Channel Busy Ratio, CBR), a maximum quantity of times of retransmission, a conversion type, a quantity of receive terminals, or a maximum quantity of HARQ processes.

It should be noted that, in some embodiments, in the first preset manner, the TB associated with the N HARQ processes may also be replaced with at least one of an HARQ process, a sidelink SL process, and a media access control protocol data unit (Medium Access Control Protocol Data Unit, MAC PDU).

Alternatively, in the first preset manner, a blind retransmission resource indicated by the NR terminal is used to transmit a PSFCH. The LTE terminal avoids these resources by using the blind retransmission indication (that is, the first transmission manner). In this case, a time gap between the reservation resource in the aperiodic reservation manner (that is, the second resource reservation manner) and the blind retransmission resource meets a specific time condition. For example, the time gap may be a data processing time of the terminal or a PSFCH sending processing time.

Alternatively, if the terminal is the LTE terminal, in the first preset manner, the LTE terminal determines resource reservation information by detecting first control information of each HARQ process of the LTE terminal and the NR terminal, and performs resource exclusion, so as to avoid resource reservation information of the NR terminal.

Optionally, when the terminal meets that the TB transmitted by the terminal associates with the N HARQ processes, the terminal further meets at least one of the following:

selecting M×N candidate resources, where M is 1 or 2; and
sending association indication information, where the association indication information is used to indicate that reservation resources of Q HARQ processes are reservation resources of a same TB, and Q is a positive integer less than or equal to N.

The terminal may send the association indication information to the NR receive terminal, and indicate, by using the association indication information, that preview resources of the Q HARQ processes in the N HARQ processes are preview resources of a same TB.

Optionally, the association indication information is implemented by any one of the following:

sending an HARQ process association indication field in a reserved bit of the first control information, to indicate at least one of a time domain resource and a frequency domain resource of the reservation resources of the Q HARQ processes;
sending an HARQ process association indication field in the second control information, to indicate at least one of a time domain resource or a frequency domain resource of the reservation resources of the Q HARQ processes; and when the second control information is in the first information format, a time domain resource indication field in the second control information indicating time domain resources reserved by two or three HARQ processes, and/or a frequency domain resource indication field in the second control information indicating frequency domain resources reserved by two or three HARQ processes.

For example, the NR terminal may send the HARQ process association indication field in the reserved bit of the first control information, to indicate at least one of the time domain resource and the frequency domain resource of reservation resources of the Q HARQ processes. In this case, for the LTE terminal, reservation resources of multiple HARQ processes are reservation resources in multiple periods, and resource exclusion may be performed based on a related procedure. For the NR terminal, an aperiodic reservation resource of the NR terminal may be excluded by decoding the HARQ process association indication field in the first control information. In this case, the value of Q is related to at least one of the following: a quantity of remaining reserved bits of the first control information, a channel occupancy ratio, a channel busy ratio, a maximum quantity of times of retransmission, a conversion type, a quantity of receive terminals, or a maximum quantity of HARQ processes.

Alternatively, the NR terminal may send the HARQ process association indication field in the second control information, to indicate at least one of the time domain resource and the frequency domain resource of reservation resources of the Q HARQ processes. In this case, for the LTE terminal, reservation resources of multiple HARQ processes are reservation resources in multiple periods, and resource exclusion may be performed based on a related procedure. For the NR terminal, an aperiodic reservation resource may be obtained by decoding the first control information or the second control information, the aperiodic reservation resource of the NR terminal may be excluded by decoding the HARQ process association indication field in the first control information. In this case, the value of Q is related to at least one of the following: a quantity of bits of the second control information, a quantity of idle bits of the second control information, a channel occupancy ratio, a channel busy ratio, a maximum quantity of times of retransmission, a conversion type, a quantity of receive terminals, or a maximum quantity of HARQ processes.

Alternatively, the second control information sent by the NR terminal is the first information format, and the first information format may be a reusing SCI format 1-A indication field, where a time domain resource indication field (Time resource assignment) in the second control information indicates time domain resources reserved by two or three HARQ processes, and/or a frequency domain resource indication field (Frequency resource assignment) in the second control information indicates frequency domain resources reserved by two or three HARQ processes.

In this embodiment of this application, in the second preset manner, the terminal meets at least one of the following:

determining a time domain resource and a frequency domain resource of the first reservation resource by using a time domain reservation indication field and a frequency domain reservation indication field of the second control information; and

a time gap between the reservation resource in the second resource reservation manner and a resource transmitted in the first transmission manner being a data processing time of the terminal or a PSFCH sending processing time.

For example, the terminal is the NR terminal, and a protocol pre-defines that the resource selection manner of the NR terminal is the second preset manner, the NR terminal may determine the time domain resource and the frequency domain resource of the first reservation resource by using the time domain reservation indication field and the frequency domain reservation indication field of the second control information, for example, determine a time domain location and size of the first reservation resource, and determine a frequency domain location and size. In this case, resource selection of the NR terminal re-evaluates pre-emption to avoid a reservation resource of LTE.

Alternatively, when the protocol pre-defines that the resource selection manner of the NR terminal is the second preset manner, a resource indicated in this case in the first transmission manner (blind retransmission) is used to transmit the PSFCH, and the first transmission manner is used to indicate the LTE terminal to avoid these resources. A time gap between the reservation resource of the second resource reservation manner (aperiodic reservation manner) of the NR terminal and the resource of the first transmission manner meets a specific condition. For example, the time gap is a data processing time of the NR terminal or a PSFCH sending processing time.

In this embodiment of this application, when the terminal is the second-type terminal (LTE terminal), the obtaining resource reservation information includes at least one of the following:

obtaining periodic reservation information from the resource reservation indication field of the first control information, where the first control information is control information of the first-type terminal; and

obtaining first transmission manner reservation information from a time gap indication field between initial transmission and retransmission.

For example, the LTE terminal obtains the periodic reservation information from the resource reservation indication field of the first control information sent by the NR terminal. Alternatively, the LTE terminal obtains the reservation information in the first transmission manner (or may be referred to as the periodic reservation manner) from the time gap indication field between initial transmission and retransmission. Certainly, the LTE terminal may also obtain the periodic reservation information from the resource reservation indication field of the first control information, and obtains the reservation information of the first transmission manner from the time gap indication field between initial transmission and retransmission.

Step 202: The terminal performs resource selection based on the resource reservation information.

In this embodiment of this application, after obtaining the resource reservation information, the terminal performs resource selection based on the resource reservation information. For example, the resource reservation information includes a periodicity value of the first resource reservation manner (the period reservation manner), and the terminal may obtain a resource at a specific time based on the periodic value. For another example, the resource reservation information includes a time domain resource and a frequency domain resource of a reservation resource of the second resource reservation manner (the aperiodic reservation manner), and the terminal may select a time domain resource and a frequency domain resource based on the resource reservation information. Optionally, content included in the resource reservation information may be another possible case, and is not enumerated herein.

It should be noted that the resource selection performed by the terminal may include at least one of the following: determining a resource detection period (which may also be referred to as a resource detection window), determining a resource selection period (which may also be referred to as a resource selection window), determining a RSRP threshold, resource detection, resource exclusion, resource reselection, and the like.

Optionally, the performing resource selection includes at least one of the following:

excluding, based on the resource reservation information, a resource that meets a preset condition from a resource candidate set;
setting a preset RSRP threshold corresponding to the first-type terminal to be different from a preset RSRP threshold corresponding to the second-type terminal;
changing a priority of sending data by the second-type terminal; and
changing an RSRP associated with the second-type terminal obtained through measurement.

Specifically, in an implementation, the terminal may exclude, based on obtained resource reservation information, a resource that is from the resource candidate set and that meets a preset condition. For example, the excluded resource may be a resource that overlaps with a resource in the resource candidate set and where the resource reservation information whose measured RSRP is greater than a preset RSRP threshold is located. Alternatively, the excluded resource may be a reservation resource that partially overlaps with a resource in the resource candidate set and that is indicated by the resource reservation information whose measured RSRP is greater than a preset RSRP threshold. Alternatively, the excluded resource may be a resource that overlaps or partially overlaps with a reservation resource in the resource candidate set. In this case, RSRP determining is not performed. In some scenarios, the NR terminal may directly avoid an effect of the LTE terminal by using corresponding re-evaluation/pre-emption detection, so that co-frequency coexistence with the LTE can be implemented when the NR terminal does not perform another enhancement. Certainly, the excluded resource may still be another possible case. Refer to the following description, which is not enumerated herein.

In another implementation, the preset RSRP threshold corresponding to the first-type terminal (NR terminal) may be set to a threshold that is different the preset RSRP threshold corresponding to the second-type terminal (LTE terminal). Therefore, for the first-type terminal and the second-type terminal, results of comparison between the measured RSRP and preset RSRP thresholds corresponding to different-type terminals are different, and excluded resources in the resource candidate set may be different. It should be noted that setting to different preset RSRP thresholds also includes a possibility of canceling the step of comparing with the preset RSRP threshold.

Alternatively, in another implementation, a priority of sending data or reserving a resource by the second-type terminal may be changed. Because a preset RSRP threshold is corresponding to a priority, changing the priority means that a condition of resource exclusion is met only when it is determined, based on comparison between the measured RSRP threshold and the preset RSRP threshold, whether to exclude a reservation resource of the second-type terminal, and when the value of the measured RSRP is larger or smaller. This is different from an original result.

Alternatively, a method for calculating the RSRP associated with the second-type terminal obtained through measurement may be changed, and a result of comparison between the RSRP obtained through measurement and the preset RSRP threshold may also be different, so that excluded resources in the resource candidate set may also be different.

It should be noted that resource selection performed by the terminal may include at least one of the foregoing. For example, the terminal may further change the priority of sending data by the second-type terminal, and change the RSRP associated with the second-type terminal obtained through measurement, so as to perform resource selection. Alternatively, the terminal may perform resource selection in another possible implementation. This is not enumerated in this application.

Optionally, when the terminal excludes, from the resource candidate set based on the resource reservation information, the resource that meets the preset condition, the preset condition includes at least one of the following.

A resource in which the resource reservation information is located at least partially overlaps with a resource and/or a reservation resource in the resource candidate set, and the measured RSRP is greater than the preset RSRP threshold.

A reservation resource indicated by the resource reservation information at least partially overlaps with a resource and/or a reservation resource in the resource candidate set, and the measured RSRP is greater than the preset RSRP threshold.

A resource in which the resource reservation information is located at least partially overlaps with a resource and/or a reservation resource in the resource candidate set.

A reservation resource indicated by the resource reservation information at least partially overlaps with a resource and/or a reservation resource in the resource candidate set.

For example, if the preset condition is that the resource in which the resource reservation information is located partially overlaps with the resource in the resource candidate set, the terminal may exclude a resource that is in the resource set and that partially overlaps with the resource in which the resource reservation information is located. Alternatively, if the preset condition is that a reservation resource indicated by the resource reservation information overlaps with a resource and a reservation resource in the resource candidate set, the terminal may exclude a resource that is in the reservation resource indicated by the resource reservation information and that overlaps with the resource and the reservation resource in the resource candidate set. Certainly, the preset condition may alternatively be in the foregoing another possible form. This is not enumerated herein. In this embodiment of this application, the terminal can exclude, from the resource candidate set based on the resource reservation information, a resource that meets the preset condition, so as to implement resource selection.

In this embodiment of this application, that the terminal performs resource selection may further include the following.

The terminal sorts, based on a received signal strength indication (Received Signal Strength Indication, RSSI) measurement result, resources after resource exclusion is performed in the resource candidate set.

For example, the terminal may exclude, from the resource candidate set based on the resource reservation information, a resource that meets the preset condition, perform resource exclusion on the resource candidate set. For a specific implementation of resource exclusion, reference may be made to the foregoing description. Details are not described herein again. In this embodiment of this application, the terminal can sort, based on the RSSI measurement result, the resources after resource exclusion is performed in the resource candidate set, and then perform resource selection, so as to implement co-frequency coexistence between the NR terminal and the resource of the LTE terminal.

Optionally, that the terminal performs resource selection may further include:
initializing the resource candidate set.

It may be understood that the terminal performs initialization on the resource candidate set to implement resource selection.

The initializing the resource candidate set to obtain at least one of the following:

at least a part of candidate resources in a resource selection window;
at least a part of candidate resources obtained after an unmonitored resource and a reservation resource of the unmonitored resource are removed from the resource selection window; and
a null set.

For example, the terminal initializes the resource candidate set to some candidate resources or all candidate resources in the resource selection window. Alternatively, the terminal initializes the resource candidate set to some or all candidate resources obtained after the unmonitored resource and the reservation resource of the unmonitored resource are removed. Alternatively, the terminal initializes the resource candidate set to a null set.

In this embodiment of this application, that the terminal performs resource selection may further include the following:
obtaining the measured RSRP.

It may be understood that the terminal, by obtaining the measured RSRP, can learn a power level or strength of a signal received or sent by the terminal, and perform resource selection based on the measured RSRP.

Optionally, the obtaining the measured RSRP includes:
obtaining the measured RSRP based on a demodulation reference signal (Demodulation Reference Signal, DMRS) mode.

The obtaining the measured RSRP based on the DMRS pattern includes at least one of the following:

determining the DMRS pattern based on first information, and obtaining the measured RSRP based on the DMRS pattern; and
obtaining the measured RSRP based on a DMRS transmitted on a target antenna port, where the target antenna port is an antenna port indicated by the first control information.

Optionally, the first information includes at least one of the following: a control information format, a resource in which control information is located, a received signal type, type information of the terminal, a related indication field of the DMRS pattern, version information of the DMRS pattern, and a resource allocation manner of the DMRS pattern. The control information is at least one of the first control information, the second control information, and the third control information.

For example, the first information is a resource in which the first control information is located, so that the terminal can determine the DMRS pattern based on the resource in which the first control information is located, and obtain the measured RSRP based on the DMRS pattern. For another example, the first information is DMRS pattern version information, and can also determine the DMRS pattern based on the DMRS pattern version information, so that the terminal obtains the measured RSRP based on the DMRS pattern. Certainly, the first information may be in another possible form, and is not enumerated in this application.

Optionally, the terminal may further obtain the measured RSRP based on the DMRS transmitted on the target antenna port, and the target antenna port is indicated by using the first control information.

It should be noted that, when the terminal is the second-type terminal (that is, the LTE terminal), a measured RSRP measurement value may be an average value or a weighted average value of measured values on a physical sidelink control channel (Physical Sidelink Control Channel, PSCCH) and a physical sidelink shared channel (Physical Sidelink Shared Channel, PSSCH).

In this embodiment of this application, when the terminal performs resource selection, a resource detection time period of the terminal is in an ($n$ - $T_0$, $n - T_0, n - T_{proc,0}^{SL}$ ) range, where n is a time for triggering resource selection, $T_0$ is a time length related variable of a detection window indicated by a higher layer, and $T_{proc,0}^{SL}$ is a parameter pre-defined in a protocol or pre-configured by a network or configured by a network.

Optionally, for the first-type terminal, that is, the NR terminal, a reservation period set of the terminal may be [20, 50, 100, 200, ......1,000] ms, and the reservation period set is determined by using at least one of the following: a protocol pre-definition, pre-configuration, or configuration. A reservation period set of the NR terminal is configured as a same reservation period set as that of the LTE terminal, so that the NR terminal does not perform resource reservation in another period. Therefore, the NR terminal does not indicate that the LTE terminal does not have a configured reservation period, so that the LTE terminal cannot correctly understand the resource reservation of the NR terminal.

In this embodiment of this application, a quantity of transmission resources is granted by any one of a DCI indication, an SCI indication, a higher layer indication, and a configuration grant, and the quantity of transmission resources is a maximum of two. In this case, if the terminal is the NR terminal, the NR terminal indicates a reservation resource by using the first control information. In this case, a maximum of two transmission resources are indicated. Through the configuration, the LTE terminal cannot correctly obtain a resource of the NR terminal because the NR terminal indicates the three reservation resources, or the NR terminal does not correctly set or misconfigure the resource reservation information in the first control information because any one of the DCI indication, the SCI indication, the higher layer indication, or the configuration grant indicates the three resources.

Optionally, a maximum time gap of the transmission resource is 15 time units. When the terminal is the LTE terminal, the time unit is a subframe; and when the terminal is the NR terminal, the time unit is a timeslot. Through the configuration, the retransmission resource indicated by the NR terminal does not exceed 15 time units, so that when only 15 subframes between the retransmission resource and an initial transmission resource of the LTE terminal can be matched, the LTE terminal can correctly decode and use the retransmission resource indicated by the NR terminal.

When there are three transmission resources indicated by any one of the higher layer indication, the DCI indication, and the SCI indication, the control information indicates two of the three transmission resources. Through the configuration, the LTE terminal cannot correctly obtain the resource of the NR terminal because the NR terminal indicates the three reservation resources. It should be noted that the control information may be the second or first control information of the NR terminal, or may be the third control information of the LTE terminal. The two transmission resources indicated by the control information meet at least one of the following:

any two of the three transmission resources;
two of the three transmission resources whose time domain locations are earlier or later; and
two of the three transmission resources whose time domain locations are closer or farther.

In this embodiment of this application, that the terminal performs resource selection may include at least one of the following: determining a resource detection period (which may also be referred to as a resource detection window), determining a resource selection period (which may also be referred to as a resource selection window), determining a RSRP threshold, resource detection, resource exclusion, resource reselection, and the like. To better understand, the following provides a description by using a specific embodiment.

For example, that the terminal is the NR terminal is used as an example. That the NR terminal performs resource selection may include the following procedures: 1. Determine a location of the resource selection window. 2. Determine a location of the resource detection window, where because the first control information is introduced, a value of a

parameter $T^{SL}_{proc,0}$ that determines the location of the resource detection window needs to be considered for a processing time of the first control information. 3. Determine a priority of data sent by the NR terminal and an intermediate parameter of the RSRP, that is, the preset RSRP threshold. 4. Initialize a resource candidate set. 5. Exclude, from the resource candidate set, a candidate resource that is not monitored due to half-duplex and other reasons during a resource detection process and that makes it impossible to determine whether there is a reservation resource that collides with itself. 6. Determine, based on the detected control information, related information of a terminal type or resource allocation corresponding to the control information. If the related information is the LTE terminal, resource exclusion is performed based on the periodic reservation information and the retransmission information that are obtained through decoding. In this case, resource exclusion may be performed based on the protocol pre-definition or the network pre-configuration or the network configuration and only according to a resource overlapping status, so that the NR terminal can avoid the LTE terminal, thereby implementing co-frequency coexistence. Alternatively, whether the preset RSRP threshold is met may be determined based on resource overlapping, so that the NR terminal can obtain better performance based on co-frequency coexistence. If the related information is the NR terminal, periodic reservation and aperiodic reservation information are obtained from an indication field of corresponding control information (the first control information or the second control information) based on the protocol pre-definition or the network pre-configuration or the network configuration, so as to perform resource exclusion.

According to the solution provided in this embodiment of this application, the terminal obtains corresponding resource reservation information to perform resource selection, and implements co-frequency coexistence between the NR terminal and the LTE terminal by defining a correlation rule of resource selection between the NR terminal and the LTE terminal, so as to ensure that the NR terminal communicates normally on the coexistence frequency band without affecting overall performance of the LTE terminal, thereby improving communication efficiency of a sidelink communication system.

In this embodiment of this application, after the terminal performs resource selection based on the resource reservation information, the method further includes the following.

The terminal indicates the resource reservation information based on a selected resource.

Further, the method further includes the following.

The terminal sets a reservation period indication field in the first control information or the second control information to a periodic reservation value.

For example, the terminal is the NR terminal, and the NR terminal can set the reservation period indication field in the first control information of the NR terminal to the periodic reservation value, or set the reservation period indication field in second control information of the NR terminal to the periodic reservation value, so that the receive terminal can obtain a reservation resource based on the periodic reservation value in the first control information or the second control information.

Optionally, if the second resource reservation manner and/or the resource selection manner of the terminal are/is the first preset manner, the terminal meets at least one of the following.

A transmitted TB is associated with N HARQ processes, where N is a positive integer.

A time gap between a reservation resource in the first resource reservation manner and/or a reservation resource in the second resource reservation manner and a resource in the first transmission manner is greater than a first time, where the first time is a data processing time of the terminal and/or a PSFCH sending processing time.

When the terminal is the second-type terminal, the resource reservation information is obtained by detecting first control information of each HARQ of the second-type terminal and the first-type terminal, and resource exclusion is performed.

It should be noted that the first preset manner is determined by using at least one of the following: a protocol pre-definition, pre-configuration, configuration, and an indication. A related concept related to the first preset manner may be described in the foregoing embodiment. Details are not described herein again.

Optionally, when a protocol pre-defines or pre-configures or configures or indicates that the second resource reservation manner (which may also be referred to as the aperiodic reservation manner) and/or the resource selection manner of the NR terminal is the first preset manner, the TB transmitted by the NR terminal associates with the N HARQ processes, so as to implement aperiodic reservation of a resource by using multiple different HARQ processes. For determining the value of N, refer to the description in the foregoing embodiment.

Alternatively, in some embodiments, when the second resource reservation manner and/or the resource selection manner of the NR terminal are/is the first preset manner, a time gap between the reservation resource of the second resource reservation manner corresponding to the NR terminal and the resource of the first transmission manner is greater than the first time, and/or a time gap between the reservation resource of the first resource reservation manner corresponding to the NR terminal and the resource of the first transmission manner is greater than the first time. The first time is the data processing time of the terminal and/or the PSFCH sending processing time, or the first time may be a time obtained through calculation based on the data processing time of the terminal and the PSFCH sending processing time.

Alternatively, in some embodiments, if the terminal is the LTE terminal, when the second resource reservation manner and/or the resource selection manner of the LTE terminal are/is the first preset manner, the LTE terminal obtains resource reservation information by detecting first control information of each HARQ of the LTE terminal and the NR terminal, and performs resource exclusion, so as to avoid resource reservation information of the NR terminal, thereby implementing co-frequency coexistence between the LTE terminal and the NR terminal resource.

Optionally, if the second resource reservation manner and/or the resource selection manner of the terminal are/is the second preset manner, the terminal meets at least one of the following.

A time domain resource and a frequency domain resource reserved in the second resource reservation manner are indicated by using a time domain reservation indication field and a frequency domain reservation indication field of the second control information.

A time gap between the reservation resource in the second resource reservation manner and the resource transmitted in the first transmission manner is greater than the first time, where the first time is the data processing time of the terminal or the PSFCH sending processing time.

It should be noted that the second preset manner is determined by using at least one of the following: a protocol pre-definition, pre-configuration, configuration, or an indication. A related concept related to the second preset manner may be described in the foregoing embodiment. Details are not described herein again.

Optionally, the terminal is the NR terminal, and when a protocol pre-defines or pre-configures or configures or indicates that the second resource reservation manner and/or the resource selection manner of the NR terminal are/is the second preset manner, the time domain resource and the frequency domain resource reserved in the second resource reservation manner are indicated by using the time domain reservation indication field and the frequency domain reservation indication field of the second control information.

Alternatively, in some embodiments, when the second resource reservation manner and/or the resource selection manner of the NR terminal are the second preset manner, a time gap between a preview resource in the second resource reservation manner and the resource transmitted in the first transmission manner is greater than the first time. The first time is the data processing time of the terminal and/or the PSFCH sending processing time, or the first time may be time obtained through calculation based on the data processing time of the terminal and the PSFCH sending processing time.

To better understand, the following describes implementation of the second resource reservation manner (aperiodic reservation manner) by using several specific embodiments.

Refer to FIG. 3a. The NR terminal is used as an example. In a resource selection process, the NR terminal selects four time frequency domain resources for transmitting one data TB, which is denoted as a PSSCH 1. The four time-frequency domain resources are allocated to four different HARQ processes, and then an HARQ association indication is carried by using control information, so as to indicate that resources reserved by the terminal in the four current HARQ processes belong to reserved resources of a same TB. In this case, the LTE terminal eliminates a reservation resource of the NR by using resource exclusion of different HARQ processes, so as to implement co-frequency coexistence.

Refer to FIG. 3b. The NR terminal is used as an example. In a resource selection process, the NR terminal selects four time frequency domain resources for transmitting one data TB, which is denoted as a PSSCH 2. The four time-frequency domain resources are allocated to two different HARQ processes, and when the second resource reservation manner (aperiodic reservation) is implemented by using the HARQ process, an original blind retransmission indication field in LTE sidelink is used to indicate a retransmission opportunity in a same HARQ process. In this way, by using the blind retransmission indication field in the control information, a quantity of HARQ processes can be reduced in a same quantity of times of retransmission, so that the indication field indicates a quantity of bits occupied by a related HARQ process.

Refer to FIG. 3c. The NR terminal is used as an example. In a resource selection process, the NR terminal selects three time frequency domain resources for transmitting one data TB, which is denoted as a PSSCH 3. The NR terminal reuses a resource reservation idea of R16/R17 to perform aperiodic resource reservation, and indicates a time-frequency domain location of a resource by using a time domain indication field and a frequency domain indication field in related control information. In this case, to implement co-frequency coexistence and avoid collision, the NR terminal performs exclusion on the detected LTE reservation resource in the resource selection process. In addition, before data is sent, re-evaluation and/or resource pre-emption detection are/is performed to further determine whether there is a collision with the LTE reservation resource. If a collision occurs (resource overlapping), resource reselection is performed, thereby ensuring co-frequency coexistence.

In this embodiment of this application, the method may further include the following.

The terminal performs re-evaluation and/or resource pre-emption detection.

Optionally, that the terminal performs re-evaluation and/or resource pre-emption detection includes at least one of the following.

If a selected resource overlaps with a resource indicated by the third control information and/or a retransmission resource indicated by the third control information, the terminal performs resource reselection.

Apreset RSRP threshold corresponding to the first-type terminal is set to be different from a preset RSRP threshold corresponding to the second-type terminal.

No preset RSRP threshold is set for a reservation resource of the second-type terminal.

A priority of sending data and/or reserving a resource by the second-type terminal is changed.

Priority comparison of the sending data and/or the reservation resource of the second-type terminal is skipped.

In this embodiment of this application, the terminal that performs re-evaluation and/or resource pre-emption detection may be the first-type terminal (that is, the NR terminal), and the second-type terminal is the LTE terminal. For example, if the selected resource of the NR terminal overlaps with the resource indicated by the third control information of the LTE terminal, the NR terminal performs resource reselection. For another example, the NR terminal may set a preset RSRP threshold corresponding to the LTE terminal to be different from a preset RSRP threshold corresponding to the NR terminal, so as to perform resource re-evaluation and/or resource pre-emption detection. Certainly, the NR terminal may perform resource re-evaluation and/or resource pre-emption detection in another possible implementation. This is not enumerated herein.

It should be noted that the LTE terminal cannot identify the aperiodic reservation resource of the NR terminal through contiguous partial sensing (contiguous partial sensing, CPS). Therefore, in some scenarios such as an aperiodic service, to enhance performance of co-frequency coexistence, the selected resource may be further detected based on NR re-evaluation and/or resource pre-emption detection. If it is detected that the LTE terminal reserves the selected resource of the NR terminal, reselection of the NR terminal may be triggered, so as to avoid a reservation resource of the LTE terminal.

In addition, if the LTE terminal is configured in the resource pool to schedule a resource by the base station, and the NR terminal independently selects a resource, to prevent a resource scheduled by the base station to the LTE terminal from colliding with a resource selected by the NR terminal, re-evaluation and/or resource pre-emption may be used to detect a reselection resource, thereby implementing co-frequency coexistence.

In addition, during re-evaluation and/or resource pre-emption detection, for the LTE terminal, resource occupancy of the LTE terminal may be enhanced in manners of ignoring a priority determining rule, ignoring a RSRP threshold determining rule, improving a priority of the LTE terminal, and defining a dedicated RSRP threshold for the LTE terminal, so that the NR terminal can easily avoid a reservation resource of the LTE terminal.

In this embodiment of this application, the method may further include the following.

The terminal reports detection information and/or a candidate resource set to a network side device.

Optionally, that the terminal reports detection information and/or a candidate resource set to a network side device includes at least one of the following.

The terminal reports, to the network side device, a detected reservation resource of the second-type terminal.

The terminal reports, to the network side device, the candidate resource set after the reservation resource of the second-type terminal is excluded.

It should be noted that when the resource pool is configured with LTE autonomous resource allocation and an NR base station scheduling resource, to implement co-frequency coexistence and avoid scheduling, by the base station, the resource reserved by the LTE terminal when the base station schedules the resource to the NR terminal, thereby causing a resource collision. The NR terminal may be reporting auxiliary information to assist the base station in scheduling the resource.

Optionally, the NR terminal may report a detection result of the NR terminal to the base station. In this case, the detection result is a reservation resource of the LTE terminal detected by the NR terminal. Alternatively, the NR terminal reports the candidate resource set to the base station. In this case, the candidate resource set is a resource recommended by the NR terminal to the base station, and this set has excluded a reservation resource for the LTE terminal detected by the NR terminal. The base station schedules a transmission resource of the NR terminal based on the information reported by the terminal, so as to implement co-frequency coexistence with LTE independent resource allocation.

In this embodiment of this application, when the terminal is the LTE terminal, the method may further include the following.

The terminal performs resource exclusion based on resource collision and RSSI measurement sorting.

Optionally, the LTE terminal may perform resource exclusion on the resource candidate set based on resource collision and RSSI measurement sorting. In this way, a problem that RSRP measurement of the LTE terminal is inaccurate because the NR terminal does not reuse an LTE DMRS design can be resolved.

It should be noted that, in the resource selection method provided in this embodiment of this application, the execution body may be a resource selection apparatus, or a control module that is in the resource selection apparatus and that is used to execute the resource selection method. In embodiments of this application, a resource selection apparatus provided in embodiments of this application is described by using an example in which the resource selection apparatus executes the resource selection method.

Refer to FIG. 4. FIG. 4 is a flowchart of a resource selection apparatus according to an embodiment of this application. As shown in FIG. 4, the resource selection apparatus 400 includes:

an obtaining module 401, configured to obtain resource reservation information; and
a resource selection module 402, configured to perform resource selection based on the resource reservation information.

Optionally, the resource reservation information includes at least one of the following: a priority of a data packet, a periodicity value of a first resource reservation manner, a time domain resource of a second resource reservation manner, a frequency domain resource of the second resource reservation manner, a time domain resource of a first transmission manner, a time domain resource of different HARQ processes corresponding to a same TB, and a frequency domain resource of different HARQ processes corresponding to a same TB.

Optionally, the obtaining module is configured to perform at least one of the following:

obtaining resource reservation information from a resource reservation indication field of first control information, where the first control information is control information of a first-type apparatus;
obtaining resource reservation information from a resource reservation indication field of second control information, where the second control information is control information of the first-type apparatus;
obtaining resource reservation information from a resource reservation indication field of third control information, where the third control information is control information of a second-type apparatus;
when the second resource reservation manner and/or a resource selection manner of the apparatus are/is a first preset manner, obtaining resource reservation information from HARQ association indication information in the first control information, or obtaining resource reservation information from HARQ association indication information in the second control information;
when the second resource reservation manner and/or the resource selection manner of the apparatus are/is a second preset manner, obtaining resource reservation information from the resource reservation indication field in the second control information; and
when the first transmission manner and the second resource reservation manner are used by the apparatus, obtaining resource reservation information from the resource reservation indication field of the second control information and a time gap indication field between initial transmission and retransmission in the first control information.

Optionally, the first preset manner is determined by using at least one of the following: a protocol pre-definition, pre-configuration, configuration, and an indication.

And/or, the second preset manner is determined by using at least one of the following: a protocol pre-definition, pre-configuration, configuration, or an indication.

In this embodiment of this application, in the first preset manner, the apparatus meets at least one of the following.

A TB transmitted by the apparatus is associated with N HARQ processes, where N is a positive integer.

A time gap between the reservation resource in the second resource reservation manner and a resource transmitted in the first transmission manner is a data processing time of the terminal or a physical sidelink feedback channel PSFCH sending processing time.

When the apparatus is the second-type apparatus, the resource reservation information is determined by detecting first control information of each HARQ of the second-type apparatus and the first-type apparatus, and resource exclusion is performed.

Optionally, a value of N meets at least one of the following.

The value of N is determined by using at least one of the following: a protocol pre-definition, pre-configuration, configuration, a radio resource control RRC indication, a media access control control element MAC CE indication, a downlink control information DCI indication, and a sidelink control information SCI indication.

The value of N is related to at least one of the following: a channel occupancy ratio, a channel busy ratio, a maximum quantity of times of retransmission, a conversion type, a quantity of receive terminals, or a maximum quantity of HARQ processes.

Optionally, when the terminal meets that the TB transmitted by the terminal associates the N HARQ processes, the apparatus further meets at least one of the following:

selecting $M \times N$ candidate resources, where M is 1 or 2; and
sending association indication information, where the association indication information is used to indicate that reservation resources of Q HARQ processes are reservation resources of a same TB, and Q is a positive integer less than or equal to N.

Optionally, the association indication information is implemented by any one of the following:

sending an HARQ process association indication field in a reserved bit of the first control information, to indicate at least one of a time domain resource and a frequency domain resource of the reservation resources of the Q HARQ processes;
sending an HARQ process association indication field in the second control information, to indicate at least one of a time domain resource or a frequency domain resource of the reservation resources of the Q HARQ processes; and
when the second control information is in a first information format, a time domain resource indication field in the second control information indicating time domain resources reserved by two or three HARQ processes, and/or a frequency domain resource indication field in the first control information indicating frequency domain resources reserved by two or three HARQ processes.

Optionally, when the HARQ process association indication field is sent from the reserved bit of the first control information, a value of Q is related to at least one of the following: a quantity of remaining reserved bits of the first control information, a channel occupancy ratio, a channel busy ratio, a maximum quantity of times of retransmission, a conversion type, a quantity of receive terminals, or a maximum quantity of HARQ processes.

When the HARQ process association indication field is sent in the second control information, the value of Q is related to at least one of the following: a quantity of bits of the second control information, a quantity of idle bits of the second control information, a channel occupancy ratio, a channel busy ratio, a maximum quantity of times of retransmission, a conversion type, a quantity of receive terminals, or a maximum quantity of HARQ processes.

In this embodiment of this application, in the second preset manner, the apparatus meets at least one of the following.

determining a time domain resource and a frequency domain resource of the first reservation resource by using a time domain reservation indication field and a frequency domain reservation indication field of the second control information; and
a time gap between the reservation resource in the second resource reservation manner and a resource transmitted in the first transmission manner being a data processing time of the terminal or a PSFCH sending processing time.

Optionally, the resource selection module is further configured to:

exclude, based on the resource reservation information, a resource that meets a preset condition from a resource candidate set;
set a preset RSRP threshold corresponding to the first-type apparatus to be different from a preset RSRP threshold corresponding to the second-type apparatus.
change a priority of sending data by the second-type apparatus; and
change an RSRP associated with the second-type apparatus obtained through measurement.

Optionally, in the second preset manner, the apparatus meets at least one of the following.

A resource in which the resource reservation information is located at least partially overlaps with a resource and/or a reservation resource in the resource candidate set, and the measured RSRP is greater than the preset RSRP threshold.

A reservation resource indicated by the resource reservation information at least partially overlaps with a resource and/or a reservation resource in the resource candidate set, and the measured RSRP is greater than the preset RSRP threshold.

A resource in which the resource reservation information is located at least partially overlaps with a resource and/or a reservation resource in the resource candidate set.

A reservation resource indicated by the resource reservation information at least partially overlaps with a resource and/or a reservation resource in the resource candidate set.

Optionally, the resource selection module is further configured to:
initialize the resource candidate set.

Optionally, the resource selection module is further configured to obtain at least one of the following:

at least a part of candidate resources in a resource selection window;
at least a part of candidate resources obtained after an unmonitored resource and a reservation resource of the unmonitored resource are removed from the resource selection window; and

a null set.

Optionally, the resource selection module is further configured to:
obtain the measured RSRP.

Optionally, the resource selection module is further configured to:
obtain the measured RSRP based on a demodulation reference signal DMRS pattern.

Optionally, the resource selection module is further configured to perform at least one of the following:

determining the DMRS pattern based on first information, and obtaining the measured RSRP based on the DMRS pattern; and

obtaining the measured RSRP based on a DMRS transmitted on a target antenna port, where the target antenna port is an antenna port indicated by the first control information.

Optionally, the first information includes at least one of the following: a control information format, a resource in which control information is located, a received signal type, type information of the apparatus, a related indication field of the DMRS pattern, version information of the DMRS pattern, and a resource allocation manner of the DMRS pattern.

Optionally, when the apparatus is the second-type apparatus, the measured RSRP value obtained through measurement is an average value or a weighted average value of a measured value on a physical side link control channel PSCCH and a physical side link shared channel PSSCH.

Optionally, the resource selection module is further configured to:
sort, based on a received signal strength indication RSSI measurement result, resources after resource exclusion is performed in the resource candidate set.

Optionally, the apparatus further includes:
an indication module, configured to indicate the resource reservation information based on a selected resource.

Optionally, the apparatus further includes:
a setting module, configured to set a reservation period indication field in the first control information or the second control information to a periodic reservation value.

Optionally, if the second resource reservation manner and/or the resource selection manner of the apparatus are/is the first preset manner, the apparatus meets at least one of the following.

A transmitted TB is associated with N HARQ processes, where N is a positive integer.

A time gap between a reservation resource in the first resource reservation manner and/or a reservation resource in the second resource reservation manner and a resource in the first transmission manner is greater than a first time, where the first time is a data processing time of the apparatus and/or a PSFCH sending processing time.

When the apparatus is the second-type apparatus, the resource reservation information is obtained by detecting first control information of each HARQ of the second-type apparatus and the first-type apparatus, and resource exclusion is performed.

Alternatively, if the second resource reservation manner and/or the resource selection manner of the apparatus are/is the second preset manner, the apparatus meets at least one of the following.

A time domain resource and a frequency domain resource reserved in the second resource reservation manner are indicated by using a time domain reservation indication field and a frequency domain reservation indication field of the second control information.

A time gap between the reservation resource in the second resource reservation manner and the resource transmitted in the first transmission manner is greater than the first time, where the first time is the data processing time of the apparatus or the PSFCH sending processing time.

Optionally, the apparatus further includes:
a detection module, configured to perform re-evaluation and/or resource pre-emption detection.

Optionally, the detection module is configured to perform at least one of the following.

If a selected resource overlaps with a resource indicated by the third control information and/or a retransmission resource indicated by the third control information, the apparatus performs resource reselection.

A preset RSRP threshold corresponding to the first-type apparatus is set to be different from a preset RSRP threshold corresponding to the second-type apparatus.

No preset RSRP threshold is set for a reservation resource of the second-type apparatus.

A priority of sending data and/or reserving a resource by the second-type apparatus is changed.

Priority comparison of the sending data and/or the reservation resource of the second-type apparatus is skipped.

Optionally, the apparatus further includes:
a reporting module, configured to report detection information and/or a candidate resource set to a network side device.

Optionally, the reporting module is further configured to perform at least one of the following:

report a detected reservation resource of the second-type terminal to the network side device.

report, to the network side device, the candidate resource set after the reservation resource of the second-type terminal is excluded.

Optionally, when the apparatus is the second-type apparatus, the obtaining module is further configured to perform at least one of the following:

obtaining periodic reservation information from a resource reservation indication field of the first control information, where the first control information is control information of the first-type apparatus; and

obtaining first transmission manner reservation information from a time gap indication field between initial transmission and retransmission.

Optionally, when the apparatus is the second-type apparatus, the apparatus further includes: an exclusion module, configured to perform resource exclusion based on resource collision and RSSI measurement sorting.

Optionally, when the apparatus performs resource selection, a resource detection time period of the apparatus is in an ($n$ - $T_0$, $n - T^{SL}_{proc,0}$ ) range.

Herein, n is a time for triggering resource selection, $T_0$ is a time length related variable of a detection window indicated by a higher layer, and $T^{SL}_{proc,0}$ is a parameter predefined in a protocol or pre-configured by a network or configured by a network.

Optionally, a reservation period set of the first-type apparatus is determined by using at least one of the following: a protocol pre-definition, pre-configuration, or configuration.

Optionally, a quantity of transmission resources of the apparatus is granted by any one of a DCI indication, an SCI indication, a higher layer indication, and a configuration grant, and the quantity of transmission resources is a maximum of two.

Optionally, a maximum time gap of the transmission resource is 15 time units.

Optionally, when there are three transmission resources indicated by any one of the higher layer indication, the DCI indication, and the SCI indication, the control information indicates two of the three transmission resources.

Optionally, the two transmission resources indicated by the control information meet at least one of the following:

any two of the three transmission resources;

two of the three transmission resources whose time domain locations are earlier or later; and

two of the three transmission resources whose time domain locations are closer or farther.

It should be noted that the apparatus in this embodiment of this application may also refer to the terminal in the foregoing embodiment, and the first-type apparatus and the second-type apparatus may respectively refer to the first-type terminal and the second-type terminal in the foregoing embodiment, or respectively refer to internal components that can execute the foregoing resource selection method in the first-type terminal and the second-type terminal.

In this embodiment of this application, the apparatus obtains corresponding resource reservation information to perform resource selection, and defines correlation rules for resource selection of apparatuses of different communication types, so that apparatuses of different communication types can implement co-frequency coexistence, thereby improving communication efficiency of a sidelink communication system.

The resource selection apparatus in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The resource selection apparatus provided in this embodiment of this application can implement the processes implemented in the method embodiments in FIG. 2 to FIG. 3c, and achieve a same technical effect. To avoid repetition, details are not described herein again.

Optionally, as shown in FIG. 5, an embodiment of this application further provides a communication device 500, including a processor 501, a memory 502, and a program or instructions stored in the memory 502 and executable on the processor 501. For example, when the communication device 500 is a terminal, when the program or instructions are executed by the processor 501, each process of the above resource selection method can be achieved, and the same technical effect can be achieved. In order to avoid repetition, details are not described herein.

An embodiment of this application further provides a terminal, including a processor and a communication interface. The processor is configured to: obtain resource reservation information, and perform resource selection based on the resource reservation information. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 6 is a schematic diagram of a hardware structure of a terminal according to an embodiment of this application.

The terminal 600 includes but is not limited to at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art can understand that the terminal 600 may further include a power supply (such as a battery) that supplies power to each component. The power supply may be logically connected to the processor 610 by using a power supply management system, to implement functions such as charging and discharging management, and power consumption management by using the power supply management system. The terminal structure shown in FIG. 6 constitutes no limitation on the terminal, and the terminal may include more or fewer components than those shown in the figure, or combine some components, or have different component arrangements. Details are not described herein.

It should be understood that, in this embodiment of this application, the input unit 604 may include a graphics processing unit (Graphics Processing Unit, GPU) 6041 and a microphone 6042, and the graphics processing unit 6041 processes image data of a still picture or a video obtained by an image capture apparatus (such as a camera) in a video capture mode or an image capture mode. The display unit 606 may include a display panel 6061. Optionally, the display panel 6061 may be configured in a form such as a liquid crystal display or an organic light-emitting diode. The user input unit 607 includes a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power on/off button), a trackball, a mouse, and a joystick. Details are not described herein.

In this embodiment of this application, the radio frequency unit 601 receives downlink data from a network side device and then sends the downlink data to the processor 610 for processing; and sends uplink data to the network side device. Usually, the radio frequency unit 601 includes but is not limited to an antenna, at least one amplifier, a transceiver, a coupler, a low noise amplifier, a duplexer, and the like.

The memory 609 may be configured to store a software program or instructions and various data. The memory 609 may mainly include a program or instruction storage area and a data storage area. The program or instruction storage area may store an operating system, and an application or an instruction required by at least one function (for example, a sound playing function or an image playing function). In addition, the memory 609 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 610 may include one or more processing units. Optionally, an application processor and a modem processor may be integrated into the processor 610. The application processor mainly processes an operating system, a user interface, an application, an instruction, or the like. The modem processor mainly processes wireless communication, for example, a baseband processor. It can be understood that, alternatively, the modem processor may not be integrated into the processor 610.

The processor 610 is configured to: obtain resource reservation information, and perform resource selection based on the resource reservation information.

Optionally, the resource reservation information includes at least one of the following: a priority of a data packet, a periodicity value of a first resource reservation manner, a time domain resource of a second resource reservation manner, a frequency domain resource of the second resource reservation manner, a time domain resource of a first transmission manner, a time domain resource of different HARQ processes corresponding to a same TB, and a frequency domain resource of different HARQ processes corresponding to a same TB.

Optionally, the processor 610 is further configured to perform at least one of the following:

obtaining resource reservation information from a resource reservation indication field of the first control information, where the first control information is control information of a first-type terminal;
obtaining resource reservation information from a resource reservation indication field of second control information, where the second control information is control information of the first-type terminal;
obtaining resource reservation information from a resource reservation indication field of third control information, where the third control information is control information of a second-type terminal;

when the second resource reservation manner and/or a resource selection manner of the terminal are a first preset manner, obtaining resource reservation information from HARQ association indication information in the first control information, or obtaining resource reservation information from HARQ association indication information in the second control information;

when the second resource reservation manner and/or the resource selection manner of the terminal are/is a second preset manner, obtaining resource reservation information from the resource reservation indication field in the second control information; and

when the first transmission manner and the second resource reservation manner are used by the terminal, obtaining resource reservation information from the resource reservation indication field of the second control information and a time gap indication field between initial transmission and retransmission in the first control information.

Optionally, the first preset manner is determined by using at least one of the following: a protocol pre-definition, pre-configuration, configuration, and an indication.

And/or, the second preset manner is determined by using at least one of the following: a protocol pre-definition, pre-configuration, configuration, or an indication.

In this embodiment of this application, in the first preset manner, the terminal meets at least one of the following.

A TB transmitted by the terminal is associated with N HARQ processes, where N is a positive integer.

A time gap between the reservation resource in the second resource reservation manner and a resource transmitted in the first transmission manner is a data processing time of the terminal or a physical sidelink feedback channel PSFCH sending processing time.

When the terminal is the second-type terminal, the resource reservation information is determined by detecting first control information of each HARQ of the second-type terminal and the first-type terminal, and resource exclusion is performed.

Optionally, a value of N meets at least one of the following.

The value of N is determined by using at least one of the following: a protocol pre-definition, pre-configuration, configuration, a radio resource control RRC indication, a media access control control element MAC CE indication, a downlink control information DCI indication, and a sidelink control information SCI indication.

The value of N is related to at least one of the following: a channel occupancy ratio, a channel busy ratio, a maximum quantity of times of retransmission, a conversion type, a quantity of receive terminals, or a maximum quantity of HARQ processes.

Optionally, when the terminal meets that the TB transmitted is associated with the N HARQ processes, the processor 610 further meets at least one of the following:

selecting $M \times N$ candidate resources, where M is 1 or 2; and

sending association indication information, where the association indication information is used to indicate that reservation resources of Q HARQ processes are reservation resources of a same TB, and Q is a positive integer less than or equal to N.

Optionally, the association indication information is implemented by any one of the following:

sending an HARQ process association indication field in a reserved bit of the first control information, to indicate at least one of a time domain resource and a frequency domain resource of the reservation resources of the Q HARQ processes;

sending an HARQ process association indication field in the second control information, to indicate at least one of a time domain resource or a frequency domain resource of the reservation resources of the Q HARQ processes; and

when the second control information is in a first information format, a time domain resource indication field in the second control information indicating time domain resources reserved by two or three HARQ processes, and/or a frequency domain resource indication field in the first control information indicating frequency domain resources reserved by two or three HARQ processes.

Optionally, when the HARQ process association indication field is sent from the reserved bit of the first control information, a value of Q is related to at least one of the following: a quantity of remaining reserved bits of the first control information, a channel occupancy ratio, a channel busy ratio, a maximum quantity of times of retransmission, a conversion type, a quantity of receive terminals, or a maximum quantity of HARQ processes.

When the HARQ process association indication field is sent in the second control information, the value of Q is related to at least one of the following: a quantity of bits of the second control information, a quantity of idle bits of the second control information, a channel occupancy ratio, a channel busy ratio, a maximum quantity of times of retransmission, a conversion type, a quantity of receive terminals, or a maximum quantity of HARQ processes.

Optionally, in the second preset manner, the processor 610 is further configured to perform at least one of the following:

determining a time domain resource and a frequency domain resource of the first reservation resource by using a time domain reservation indication field and a frequency domain reservation indication field of the second control information; and

a time gap between the reservation resource in the second resource reservation manner and a resource transmitted in the first transmission manner being a data processing time of the terminal or a PSFCH sending processing time.

Optionally, the processor 610 is further configured to perform at least one of the following:

excluding, based on the resource reservation information, a resource that meets a preset condition from a resource candidate set;

setting a preset RSRP threshold corresponding to the first-type terminal to be different from a preset RSRP threshold corresponding to the second-type terminal;

changing a priority of sending data by the second-type terminal; and

changing an RSRP associated with the second-type terminal obtained through measurement.

Optionally, in the second preset manner, the apparatus meets at least one of the following.

A resource in which the resource reservation information is located at least partially overlaps with a resource and/or a reservation resource in the resource candidate set, and the measured RSRP is greater than the preset RSRP threshold.

A reservation resource indicated by the resource reservation information at least partially overlaps with a resource and/or a reservation resource in the resource candidate set, and the measured RSRP is greater than the preset RSRP threshold.

A resource in which the resource reservation information is located at least partially overlaps with a resource and/or a reservation resource in the resource candidate set.

A reservation resource indicated by the resource reservation information at least partially overlaps with a resource and/or a reservation resource in the resource candidate set.

Optionally, the processor 610 is further configured to:
initialize the resource candidate set.

Optionally, the processor 610 is further configured to perform at least one of the following:

at least a part of candidate resources in a resource selection window;

at least a part of candidate resources obtained after an unmonitored resource and a reservation resource of the unmonitored resource are removed from the resource selection window; and

a null set.

Optionally, the processor 610 is further configured to:
obtain the measured RSRP.

Optionally, the processor 610 is further configured to:
obtain the measured RSRP based on a demodulation reference signal DMRS pattern.

Optionally, the processor 610 is further configured to perform at least one of the following:

determining the DMRS pattern based on first information, and obtaining the measured RSRP based on the DMRS pattern; and

obtaining the measured RSRP based on a DMRS transmitted on a target antenna port, where the target antenna port is an antenna port indicated by the first control information.

Optionally, the first information includes at least one of the following: a control information format, a resource in which control information is located, a received signal type, type information of the terminal, a related indication field of the DMRS pattern, version information of the DMRS pattern, and a resource allocation manner of the DMRS pattern.

Optionally, when the apparatus is the second-type apparatus, the measured RSRP value obtained through measurement is an average value or a weighted average value of a measured value on a physical side link control channel PSCCH and a physical sidelink shared channel PSSCH.

Optionally, the processor 610 is further configured to:
sort, based on a received signal strength indication RSSI measurement result, resources after resource exclusion is performed in the resource candidate set.

Optionally, the processor 610 is further configured to:
indicate the resource reservation information based on a selected resource.

Optionally, the processor 610 is further configured to:
set a reservation period indication field in the first control information or the second control information to a periodic reservation value.

Optionally, if the second resource reservation manner and/or the resource selection manner of the terminal are/is the first preset manner, the terminal meets at least one of the following.

A transmitted TB is associated with N HARQ processes, where N is a positive integer.

A time gap between a reservation resource in the first resource reservation manner and/or a reservation resource in the second resource reservation manner and a resource in the first transmission manner is greater than a first time, where the first time is a data processing time of the terminal and/or a PSFCH sending processing time.

When the terminal is the second-type terminal, the resource reservation information is obtained by detecting first control information of each HARQ of the second-type terminal and the first-type terminal, and resource exclusion is performed.

Alternatively, if the second resource reservation manner and/or the resource selection manner of the terminal are/is the second preset manner, the terminal meets at least one of the following.

A time domain resource and a frequency domain resource reserved in the second resource reservation manner are indicated by using a time domain reservation indication field and a frequency domain reservation indication field of the second control information.

A time gap between the reservation resource in the second resource reservation manner and the resource transmitted in the first transmission manner is greater than the first time, where the first time is the data processing time of the terminal or the PSFCH sending processing time.

Optionally, the processor 610 is further configured to:
perform re-evaluation and/or resource pre-emption detection.

Optionally, the processor 610 is further configured to perform at least one of the following.

If a selected resource overlaps with a resource indicated by the third control information and/or a retransmission resource indicated by the third control information, the terminal performs resource reselection.

A preset RSRP threshold corresponding to the first-type terminal is set to be different from a preset RSRP threshold corresponding to the second-type terminal.

No preset RSRP threshold is set for a reservation resource of the second-type terminal.

A priority of sending data and/or reserving a resource by the second-type terminal is changed.

Priority comparison of the sending data and/or the reservation resource of the second-type terminal is skipped.

Optionally, the processor 610 is further configured to:
The terminal reports detection information and/or a candidate resource set to a network side device.

Optionally, the processor 610 is further configured to perform at least one of the following:

report a detected reservation resource of the second-type terminal to the network side device; and
report, to the network side device, the candidate resource set after the reservation resource of the second-type terminal is excluded.

Optionally, when the terminal is a second-type terminal, the processor 610 is further configured to perform at least one of the following:

obtaining periodic reservation information from the resource reservation indication field of the first control information, where the first control information is control information of the first-type terminal; and
obtaining first transmission manner reservation information from a time gap indication field between initial transmission and retransmission.

Optionally, when the terminal is the second-type terminal, the processor 610 is further configured to:
perform resource exclusion based on resource collision and RSSI measurement sorting.

Optionally, when the terminal performs resource selection, a resource detection time period of the apparatus is in an ($n$ - $T_0$, $n - T^{SL}_{proc,0}$) range.

Herein, n is a time for triggering resource selection, $T_0$ is a time length related variable of a detection window indicated by a higher layer, and $T^{SL}_{proc,0}$ is a parameter predefined in a protocol or pre-configured by a network or configured by a network.

Optionally, a reservation period set of the first-type apparatus is determined by using at least one of the following: a protocol pre-definition, pre-configuration, or configuration.

Optionally, a quantity of transmission resources of the terminal is granted by any one of a DCI indication, an SCI indication, a higher layer indication, and a configuration grant, and the quantity of transmission resources is a maximum of two.

Optionally, a maximum time gap of the transmission resource is 15 time units.

Optionally, when there are three transmission resources indicated by any one of the higher layer indication, the DCI indication, and the SCI indication, the control information indicates two of the three transmission resources.

Optionally, the two transmission resources indicated by the control information meet at least one of the following:

any two of the three transmission resources;
two of the three transmission resources whose time domain locations are earlier or later; and
two of the three transmission resources whose time domain locations are closer or farther.

According to the solution provided in this embodiment of this application, the terminal obtains corresponding resource reservation information to perform resource selection, and implements co-frequency coexistence between the NR terminal and the LTE terminal by defining a correlation rule of resource selection between the NR terminal and the LTE terminal, so as to ensure that the NR terminal communicates normally on the coexistence frequency band without affecting overall performance of the LTE terminal, thereby improving communication efficiency of a sidelink communication system.

An embodiment of this application further provides a readable storage medium. The readable storage medium stores a program or instructions, and when the program or instructions are executed by a processor, the processes of the foregoing resource selection method embodiments are implemented, with the same technical effect achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or instructions to implement the processes of the foregoing resource selection method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product, the computer program product is stored in a non-transient storage medium, and the computer program product is executed by at least one processor to implement the processes of the foregoing method embodiment, and the same technical effects can be achieved. To avoid repetition, details are not described herein again.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in embodiments of this application is not limited to performing functions in an illustrated or di scussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in embodiments of this application.

Embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A resource selection method, comprising:

    obtaining, by a terminal, resource reservation information; and
    performing, by the terminal, resource selection based on the resource reservation information.

2. The method according to claim 1, wherein the resource reservation information comprises at least one of the following: a priority of a data packet, a periodicity value of a first resource reservation manner, a time domain resource of a second resource reservation manner, a frequency domain resource of a second resource reservation manner, a time domain resource of a first transmission manner, a time domain resource of different hybrid automatic repeat request HARQ processes corresponding to a same transmission block TB, and a frequency domain resource of different HARQ processes corresponding to a same TB.

3. The method according to claim 1, wherein the obtaining resource reservation information comprises at least one of the following:

    obtaining resource reservation information from a resource reservation indication field of first control information, wherein the first control information is control information of a first-type terminal;
    obtaining resource reservation information from a resource reservation indication field of second control information, wherein the second control information is control information of the first-type terminal;
    obtaining resource reservation information from a resource reservation indication field of third control information, wherein the third control information is control information of a second-type terminal;
    when a second resource reservation manner and/or a resource selection manner of the terminal are a first preset manner, obtaining resource reservation information from HARQ association indication information in the first control information, or obtaining resource reservation information from HARQ association indication information in the second control information;
    when the second resource reservation manner and/or the resource selection manner of the terminal are/is a second preset manner, obtaining resource reservation information from the resource reservation indication field in the second control information; and
    when a first transmission manner and the second resource reservation manner are used by the terminal, obtaining resource reservation information from the resource reservation indication field of the second control information and a time gap indication field between initial transmission and retransmission in the first control information.

4. The method according to claim 3, wherein the first preset manner is determined by using at least one of the following: a protocol pre-definition, pre-configuration, configuration, and an indication; and/or
   the second preset manner is determined by using at least one of the following: a protocol pre-definition, pre-configuration, configuration, and an indication.

5. The method according to claim 3, wherein in the first preset manner, the terminal meets at least one of the following:

    a TB transmitted by the terminal is associated with N HARQ processes, wherein N is a positive integer, wherein a time gap between a reservation resource in the second resource reservation manner and a resource transmitted in the first transmission manner is a data processing time of the terminal or a physical sidelink feedback channel PSFCH sending processing time; and
    when the terminal is the second-type terminal, determining resource reservation information by detecting first control information of each HARQ of the second-type terminal and the first-type terminal, and performing resource exclusion.

6. The method according to claim 5, wherein a value of N meets at least one of the following:

    determining by using at least one of the following: a protocol pre-definition, pre-configuration, configuration, a radio resource control RRC indication, a media access control control element MAC CE indication, a downlink control information DCI indication, and a sidelink control information SCI indication; and
being related to at least one of the following: a channel occupancy ratio, a channel busy ratio, a maximum quantity of times of retransmission, a conversion type, a quantity of receive terminals, or a maximum quantity of HARQ processes.

7. The method according to claim 5, wherein when the terminal meets that a TB transmitted is associated with N HARQ processes, the terminal further meets at least one of the following:

   selecting $M \times N$ candidate resources, wherein M is 1 or 2; and
   sending association indication information, wherein the association indication information is used to indicate that reservation resources of Q HARQ processes are reservation resources of a same TB, and Q is a positive integer less than or equal to N.

8. The method according to claim 7, wherein the association indication information is implemented by using at least one of the following:

   sending an HARQ process association indication field in a reserved bit of the first control information, to indicate at least one of a time domain resource and a frequency domain resource of the reservation resources of the Q HARQ processes; and
   sending an HARQ process association indication field in the second control information, to indicate at least one of the time domain resource and the frequency domain resource of the reservation resources of the Q HARQ processes, wherein
   when the second control information is in a first information format, a time domain resource indication field in the second control information indicates time domain resources reserved by two or three HARQ processes, and/or a frequency domain resource indication field in the first control information indicates frequency domain resources reserved by two or three HARQ processes.

9. The method according to claim 8, wherein when the HARQ process association indication field is sent in the reserved bit of the first control information, the value of Q is related to at least one of the following: a quantity of remaining reserved bits of the first control information, a channel occupancy ratio, a channel busy ratio, a maximum quantity of times of retransmission, a conversion type, a quantity of receive terminals, or a maximum quantity of HARQ processes; or
   when the HARQ process association indication field is sent in the second control information, the value of Q is related to at least one of the following: a quantity of bits of the second control information, a quantity of idle bits of the second control information, a channel occupancy ratio, a channel busy ratio, a maximum quantity of times of retransmission, a conversion type, a quantity of receive terminals, or a maximum quantity of HARQ processes.

10. The method according to claim 3, wherein in the second preset manner, the terminal meets at least one of the following:

   determining a time domain resource and a frequency domain resource of a first reservation resource by using a time domain reservation indication field and a frequency domain reservation indication field of the second control information; and
   a time gap between the reservation resource in the second resource reservation manner and a resource transmitted in the first transmission manner being a data processing time of the terminal or a PSFCH sending processing time.

11. The method according to claim 1, wherein the performing resource selection comprises at least one of the following:

   excluding, based on the resource reservation information, a resource that meets a preset condition from a resource candidate set; and
   setting a preset RSRP threshold corresponding to a first-type terminal to be different from a preset RSRP threshold corresponding to a second-type terminal;
   changing a priority of sending data by the second-type terminal; and
   changing an RSRP associated with the second-type terminal obtained through measurement.

12. The method according to claim 11, wherein the preset condition comprises at least one of the following:

a resource in which the resource reservation information is located at least partially overlaps with a resource and/or a reservation resource in the resource candidate set, and a measured RSRP is greater than the preset RSRP threshold;
a reservation resource indicated by the resource reservation information at least partially overlaps with the resource and/or the reservation resource in the resource candidate set, and a measured RSRP is greater than the preset RSRP threshold;
the resource in which the resource reservation information is located at least partially overlaps with the resource and/or the reservation resource in the resource candidate set; and
a reservation resource indicated by the resource reservation information at least partially overlaps with the resource and/or the reservation resource in the resource candidate set.

**13.** The method according to claim 1, wherein the performing resource selection comprises at least one of the following: initializing a resource candidate set.

**14.** The method according to claim 13, wherein the initializing a resource candidate set to obtain at least one of the following:

at least a part of candidate resources in a resource selection window;
at least a part of candidate resources obtained after an unmonitored resource and a reservation resource of the unmonitored resource are removed from the resource selection window; and
a null set.

**15.** The method according to claim 1, wherein the performing resource selection comprises at least one of the following: obtaining a measured RSRP.

**16.** The method according to claim 15, wherein the obtaining a measured RSRP comprises:
obtaining the measured RSRP based on a demodulation reference signal DMRS pattern.

**17.** The method according to claim 16, wherein the obtaining the measured RSRP based on a DMRS pattern comprises at least one of the following:

determining the DMRS pattern based on first information, and obtaining the measured RSRP based on the DMRS pattern; and
obtaining the measured RSRP based on a DMRS transmitted on a target antenna port, wherein the target antenna port is an antenna port indicated by first control information.

**18.** The method according to claim 17, wherein the first information comprises at least one of the following: a control information format, a resource in which control information is located, or a received signal type, type information of the terminal, a related indication field of the DMRS pattern, version information of the DMRS pattern, or a resource allocation manner of the DMRS pattern.

**19.** The method according to claim 15, wherein when the terminal is a second-type terminal, a measured RSRP value obtained through measurement is an average value or a weighted average value of a measured value on a physical sidelink control channel PSCCH and a physical sidelink shared channel PSSCH.

**20.** The method according to claim 11, wherein the performing resource selection comprises:
sorting, based on a received signal strength indicator RSSI measurement result, resources after resource exclusion is performed in the resource candidate set.

**21.** The method according to claim 1, wherein after the performing, by the terminal, resource selection based on the resource reservation information, the method further comprises:
indicating, by the terminal, the resource reservation information based on a selected resource.

**22.** The method according to claim 21, wherein the method further comprises:
setting, by the terminal, a reservation period indication field in first control information or second control information to a periodic reservation value.

**23.** The method according to claim 21, wherein in a case that the second resource reservation manner and/or a resource selection manner of the terminal are a first preset manner, the terminal meets at least one of the following:

a TB transmitted is associated with N HARQ processes, wherein N is a positive integer;
a time gap between a reservation resource in the first resource reservation manner and/or a reservation resource in the second resource reservation manner and a resource in the first transmission manner being greater than a first time, wherein the first time is a data processing time of the terminal and/or a PSFCH sending processing time; and
when the terminal is a second-type terminal, detecting first control information of each HARQ of the second-type terminal and a first-type terminal to obtain the resource reservation information, and performing resource exclusion; or
in a case that the second resource reservation manner and/or the resource selection manner of the terminal are/is a second preset manner, the terminal meets at least one of the following:

indicating a time domain resource and a frequency domain resource reserved in the second resource reservation manner by using a time domain reservation indication field and a frequency domain reservation indication field of second control information; and
a time gap between the reservation resource in the second resource reservation manner and the resource transmitted in the first transmission manner is greater than a first time, and the first time is a data processing time of the terminal or a PSFCH sending processing time.

**24.** The method according to claim 1, wherein the method further comprises:
performing, by the terminal, reevaluation and/or resource preemption detection.

**25.** The method according to claim 24, wherein the performing re-evaluation and/or resource preemption detection comprises at least one of the following:

in a case that a selected resource overlaps with a resource indicated by third control information and/or a retransmission resource indicated by the third control information, performing, by the terminal, resource reselection;
setting a preset RSRP threshold corresponding to a first-type terminal to be different from a preset RSRP threshold corresponding to a second-type terminal;
setting no preset RSRP threshold for a reservation resource of a second-type terminal;
changing a priority of sending data and/or reserving a resource by the second-type terminal; and
skipping priority comparison of the sending data and/or the reservation resource of the second-type terminal.

**26.** The method according to claim 1, wherein the method further comprises:
reporting, by the terminal, detection information and/or a candidate resource set to a network side device.

**27.** The method according to claim 26, wherein the reporting, by the terminal, detection information and/or a candidate resource set to a network side device comprises at least one of the following:

reporting, by the terminal to the network side device, a detected reservation resource of a second-type terminal; and
reporting, by the terminal to the network side device, the candidate resource set after a reservation resource of the second-type terminal is excluded.

**28.** The method according to claim 1, wherein when the terminal is a second-type terminal, the obtaining resource reservation information comprises at least one of the following:

obtaining periodic reservation information from a resource reservation indication field of first control information, wherein the first control information is control information of a first-type terminal; and
obtaining first transmission manner reservation information from a time gap indication field between initial transmission and retransmission.

**29.** The method according to claim 1, wherein when the terminal is a second-type terminal, the method further comprises:
performing, by the terminal, resource exclusion based on resource collision and RSSI measurement sorting.

**30.** The method according to claim 1, wherein when the terminal performs resource selection, a resource detection time period of the terminal is in a range ( $n - T_0, n - T_{proc,0}^{SL}$ ), wherein
n is a time for triggering resource selection, $T_0$ is a time length related variable of a detection window indicated by a higher layer, and $T_{proc,0}^{SL}$ is a parameter pre-defined in a protocol or preconfigured by a network or configured by a network.

**31.** The method according to claim 1, wherein a reservation period set of a first-type terminal is determined by using at least one of the following: a protocol pre-definition, pre-configuration, or configuration.

**32.** The method according to claim 1, wherein a quantity of transmission resources of the terminal is granted by any one of a DCI indication, an SCI indication, a higher layer indication, and a configured grant, and the quantity of transmission resources is a maximum of two.

**33.** The method according to claim 32, wherein a maximum time domain gap of the transmission resource is 15 time units.

**34.** The method according to claim 1, wherein when a quantity of transmission resources indicated by any one of a higher layer indication, a DCI indication, and an SCI indication is three, control information indicates two of the three transmission resources.

**35.** The method according to claim 34, wherein the two transmission resources indicated by the control information meet at least one of the following:

any two of the three transmission resources;
two of the three transmission resources whose time domain locations are earlier or later; and
two of the three transmission resources whose time domain locations are closer or farther.

**36.** A resource selection apparatus, comprising:

an obtaining module, configured to obtain resource reservation information; and
a resource selection module, configured to perform resource selection based on the resource reservation information.

**37.** A terminal, comprising a processor, a memory, and a program or instructions stored in the memory and capable of running on the processor, wherein when the program or the instructions are executed by the processor, the steps of the resource selection method according to any one of claims 1 to 35 are implemented.

**38.** A readable storage medium, wherein the readable storage medium stores a program or instructions, and when the program or the instructions are executed by a processor, the steps of the resource selection method according to any one of claims 1 to 35 are implemented.

**39.** A chip, comprising a processor and a communication interface, wherein the communication interface is coupled to the processor, and the processor is configured to run a program or instructions, to implement the step of the method according to any one of claims 1 to 35.

**40.** A computer program product, wherein the computer program product is stored in a non-volatile storage medium, and the computer program product is executed by at least one processor to implement the step of the resource selection according to any one of claims 1 to 35.

**41.** A communication device, configured to perform the steps of the resource selection method according to any one of claims 1 to 35.

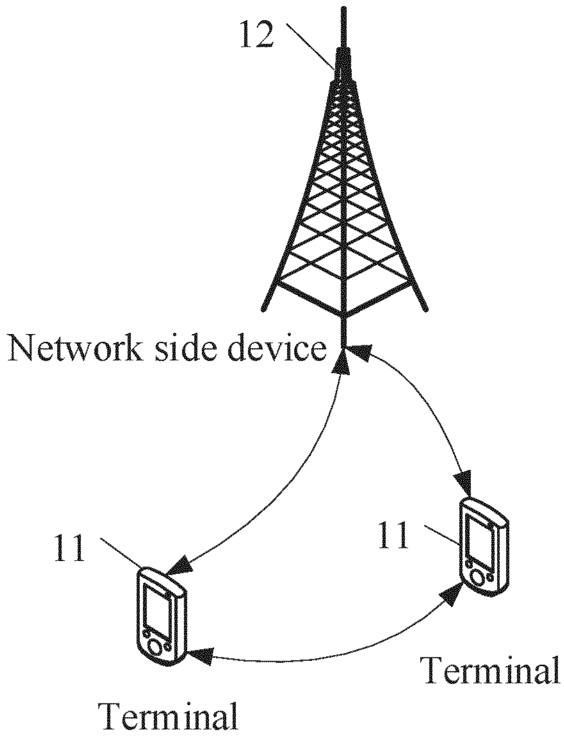
12
Network side device
11
11
Terminal
Terminal

FIG. 1a

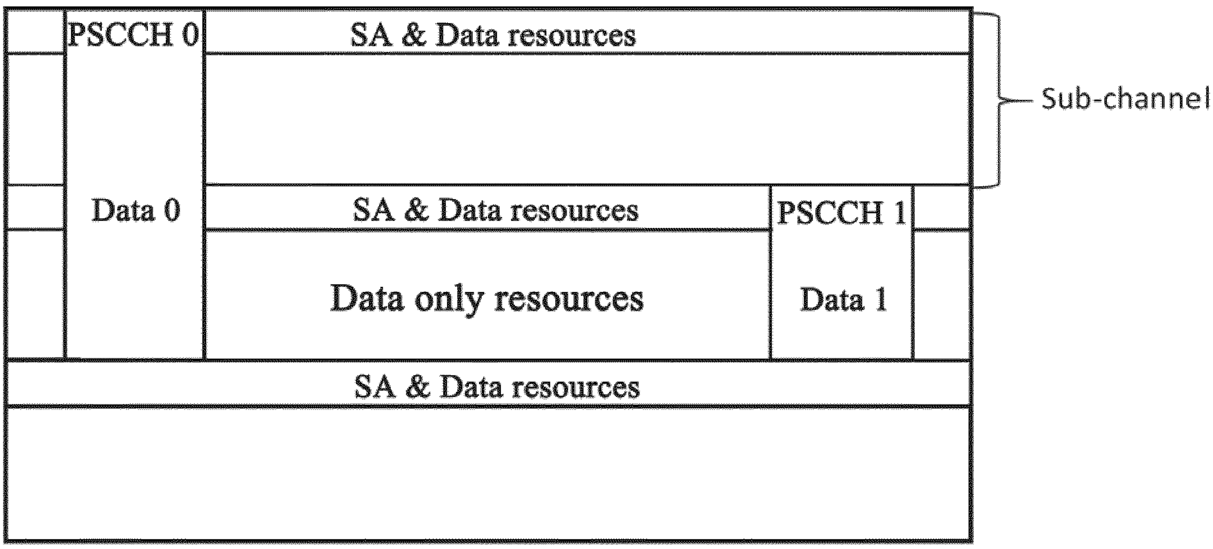
PSCCH 0
SA & Data resources
Sub-channel
Data 0
SA & Data resources
PSCCH 1
Data only resources
Data 1
SA & Data resources

FIG. 1b

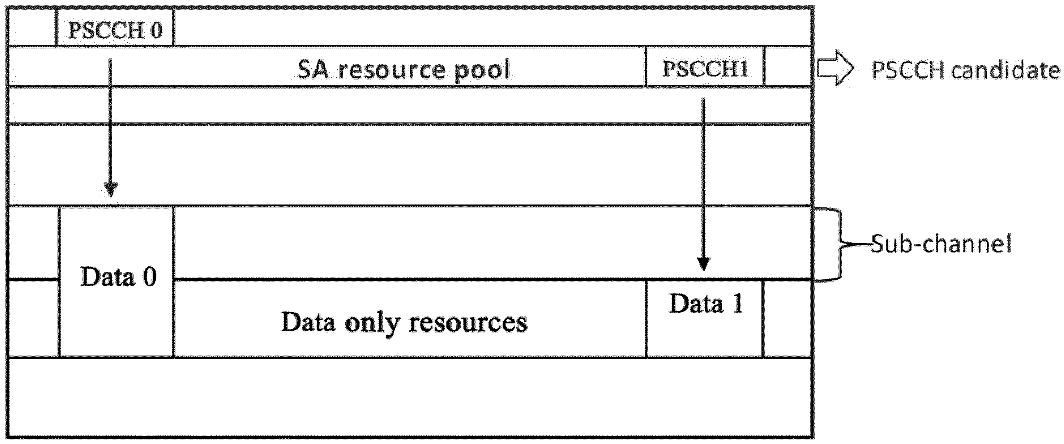


FIG. 1c

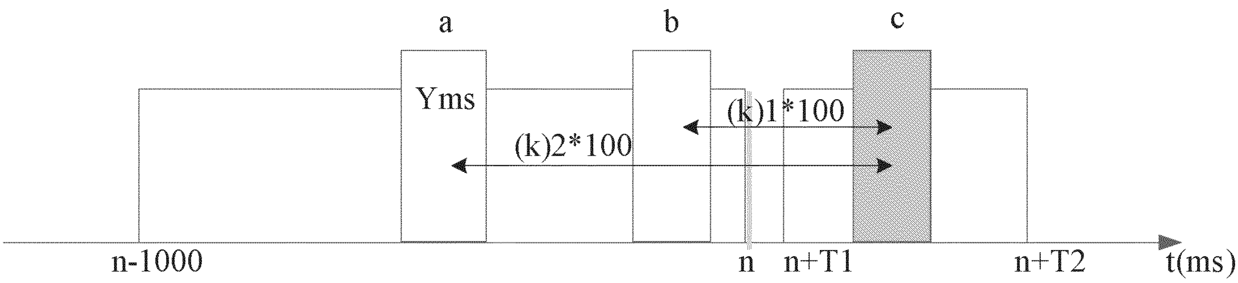


FIG. 1d

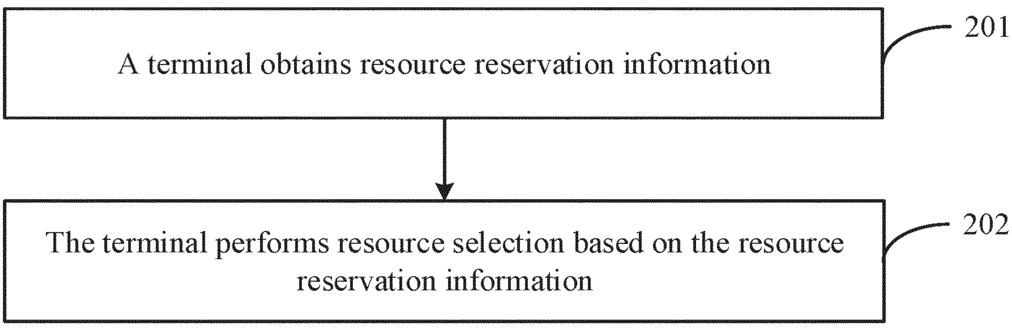


FIG. 2

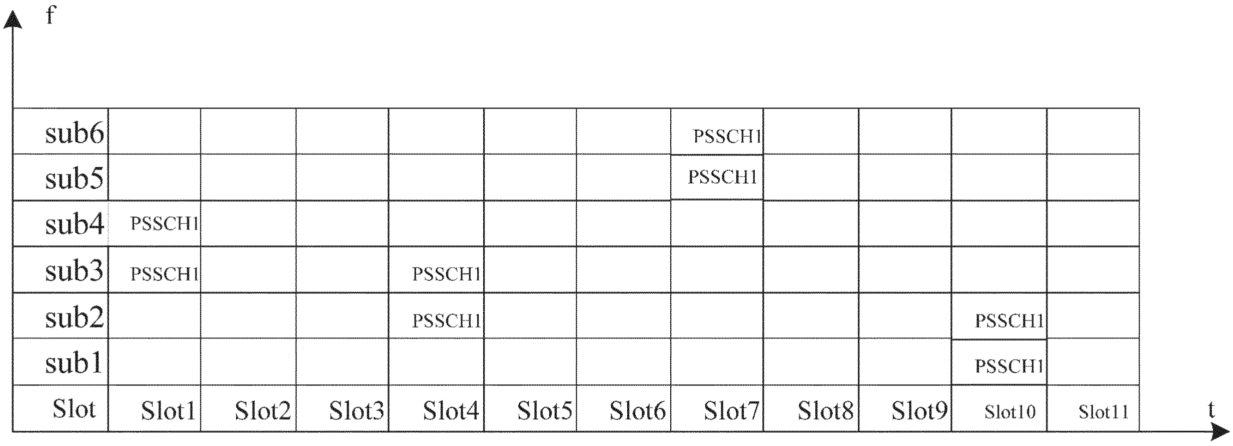
f
sub6
sub5
sub4
sub3
sub2
sub1
Slot
Slot1
Slot2
Slot3
Slot4
Slot5
Slot6
Slot7
Slot8
Slot9
Slot10
Slot11
t
PSSCH1

FIG. 3a

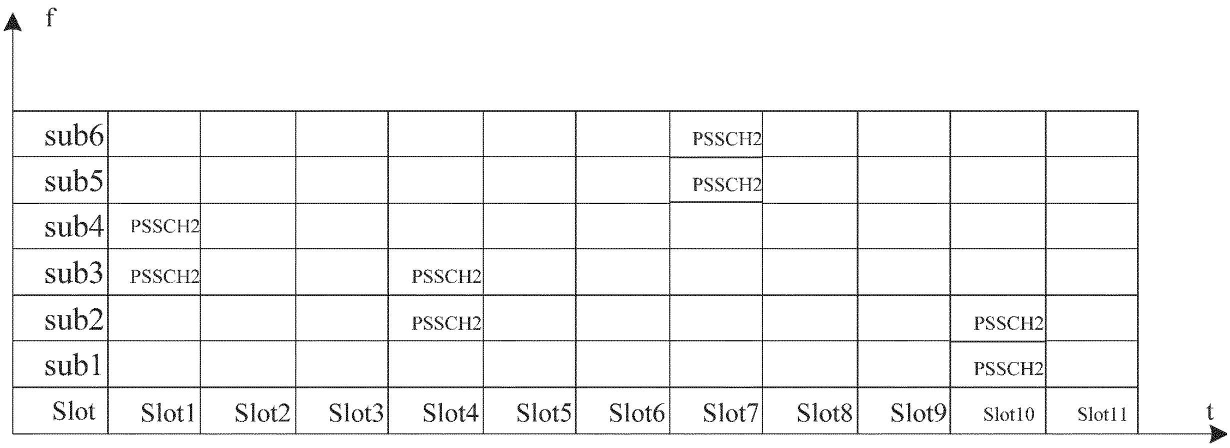
f
sub6
sub5
sub4
sub3
sub2
sub1
Slot
Slot1
Slot2
Slot3
Slot4
Slot5
Slot6
Slot7
Slot8
Slot9
Slot10
Slot11
t
PSSCH2

FIG. 3b

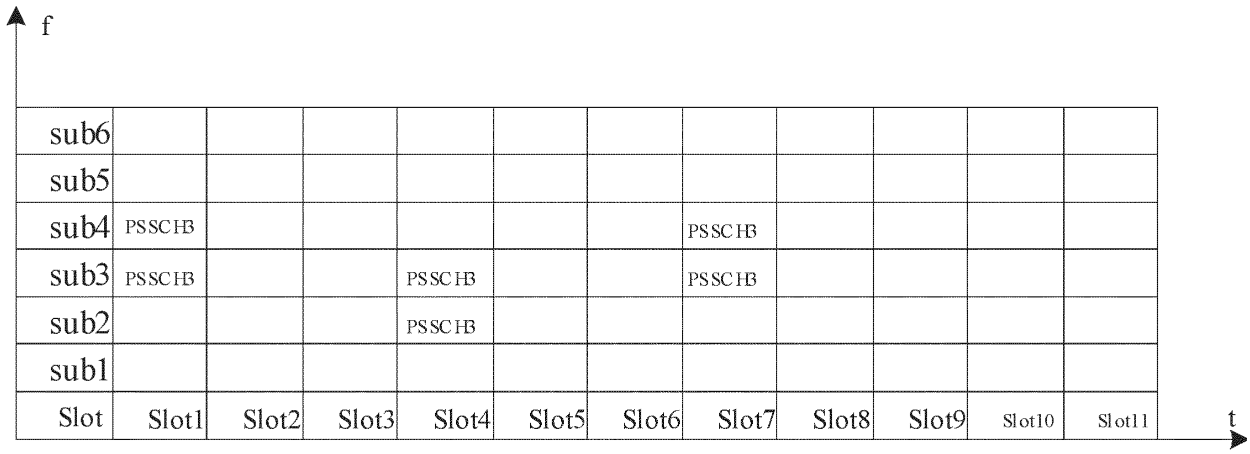


FIG. 3c

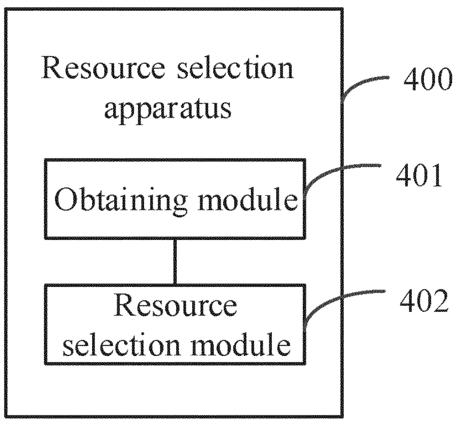


FIG. 4

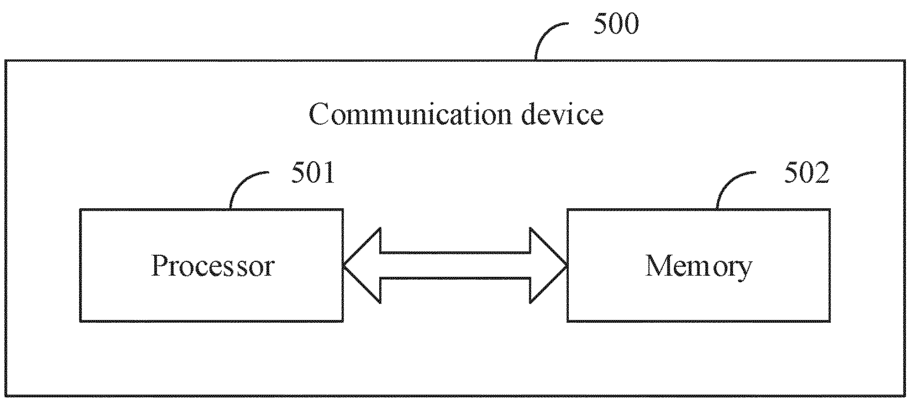


FIG. 5

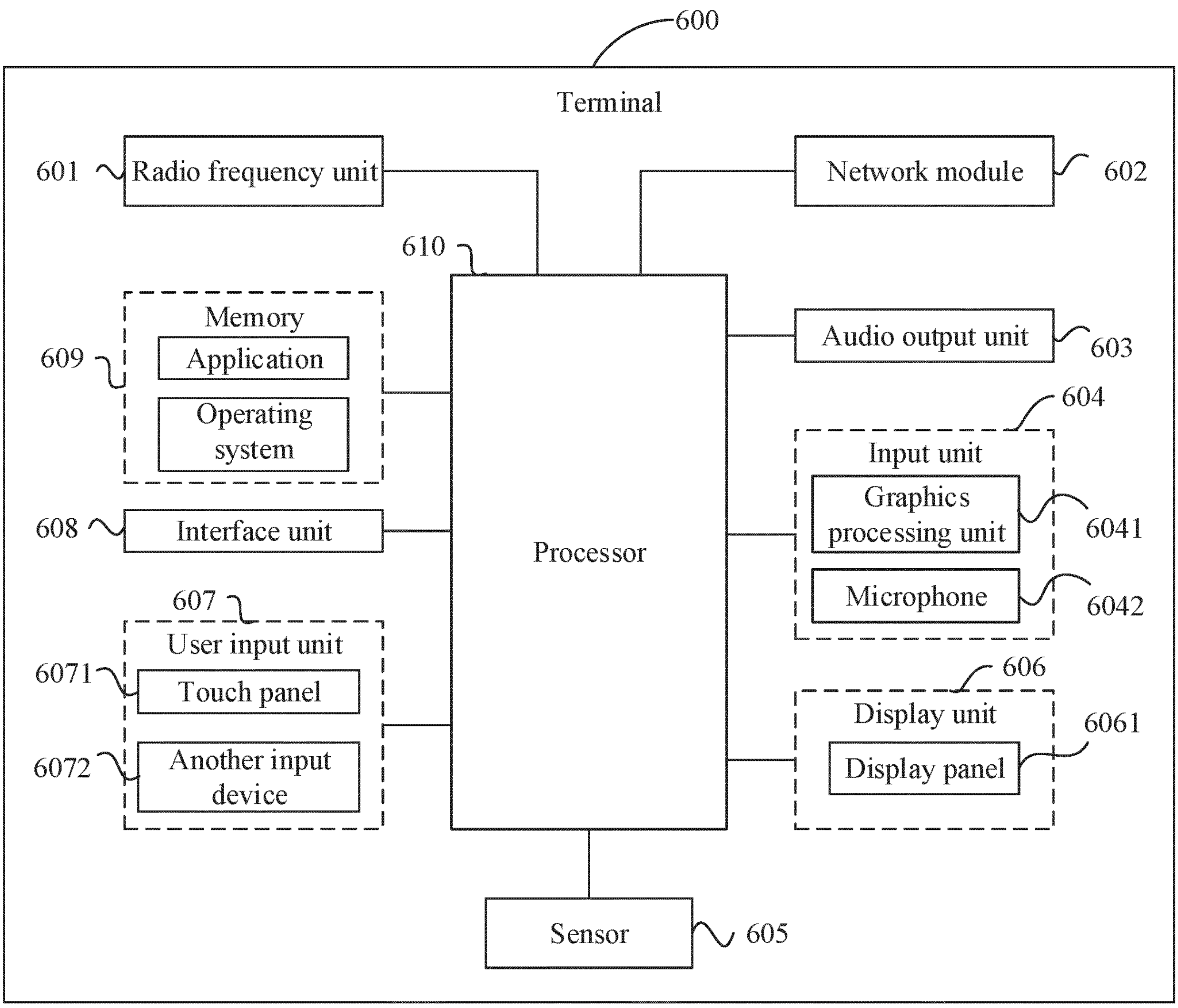
600
Terminal
601
Radio frequency unit
Network module
602
610
Memory
Application
Operating system
609
Audio output unit
603
604
Input unit
Graphics processing unit
6041
Microphone
6042
608
Interface unit
Processor
607
User input unit
6071
Touch panel
6072
Another input device
606
Display unit
6061
Display panel
Sensor
605

FIG. 6

## INTERNATIONAL SEARCH REPORT

International application No.
**PCT/CN2022/114133**

**A. CLASSIFICATION OF SUBJECT MATTER**

H04W 28/26(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; WPABS; CNKI; ENTXT; DWPI; 3GPP: 预留, 非周期, 资源, 优先级, 时域, 频域, 重传, 侧链路, 旁链路, 副链路, 侧行链路, 重选, 选择, 重评估, 抢占, reserv+, period+, resource?, priority, time, frequency, re transmi+, sidelink, re evaluat+, pre emption, RSRP

**C. DOCUMENTS CONSIDERED TO BE RELEVANT**

| Category* | Citation of document, with indication, where appropriate, of the relevant passages | Relevant to claim No. |
|---|---|---|
| X | WO 2021031043 A1 (HUAWEI TECHNOLOGIES CO., LTD.) 25 February 2021 (2021-02-25)<br>description, paragraphs 6-263 | 1-41 |
| X | US 2020029340 A1 (SAMSUNG ELECTRONICS CO., LTD.) 23 January 2020 (2020-01-23)<br>description, paragraphs 14-503 | 1-41 |
| A | CN 112822777 A (VIVO COMMUNICATION TECHNOLOGY CO., LTD.) 18 May 2021 (2021-05-18)<br>entire document | 1-41 |
| A | CN 112153705 A (HUAWEI TECHNOLOGIES CO., LTD.) 29 December 2020 (2020-12-29)<br>entire document | 1-41 |
| A | CN 110972273 A (BEIJING SPREADTRUM HIGH-TECH COMMUNICATIONS TECHNOLOGY CO., LTD.) 07 April 2020 (2020-04-07)<br>entire document | 1-41 |
| A | CN 111727624 A (BEIJING XIAOMI MOBILE SOFTWARE CO., LTD.) 29 September 2020 (2020-09-29)<br>entire document | 1-41 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2022** | **15 November 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/114133**

**C. DOCUMENTS CONSIDERED TO BE RELEVANT**

| Category* | Citation of document, with indication, where appropriate, of the relevant passages | Relevant to claim No. |
|---|---|---|
| A | US 2021212026 A1 (VIVO COMMUNICATION TECHNOLOGY CO., LTD.) 08 July 2021 (2021-07-08)<br>entire document | 1-41 |

Form PCT/ISA/210 (second sheet) (January 2015)

**INTERNATIONAL SEARCH REPORT**
**Information on patent family members**

International application No.
**PCT/CN2022/114133**

| Patent document cited in search report | Publication date (day/month/year) | Patent family member(s) | Publication date (day/month/year) |
|---|---|---|---|
| WO 2021031043 A1 | 25 February 2021 | None | |
| US 2020029340 A1 | 23 January 2020 | WO 2020017939 A1 | 23 January 2020 |
| | | KR 20210024197 A | 04 March 2021 |
| | | EP 3818758 A1 | 12 May 2021 |
| | | US 2021307023 A1 | 30 September 2021 |
| CN 112822777 A | 18 May 2021 | None | |
| CN 112153705 A | 29 December 2020 | None | |
| CN 110972273 A | 07 April 2020 | WO 2020063578 A1 | 02 April 2020 |
| CN 111727624 A | 29 September 2020 | None | |
| US 2021212026 A1 | 08 July 2021 | WO 2020063311 A1 | 02 April 2020 |
| | | CN 110972102 A | 07 April 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202110998314